# EUROPEAN PATENT APPLICATION

(11) **EP 4 780 118 A1**
(43) Date of publication of application: **22.07.2026**
(21) Application number: 24882722.2
(22) Date of filing: 15.10.2024
(51) Int. Cl.: H04W 74/04, H04W 74/00, H04W 48/20, H04W 74/0816, H04W 72/0446, H04W 72/50, H04W 84/12, H04L 5/00, H04B 7/024

(54) **METHOD AND DEVICE FOR PERFORMING COOPERATION BETWEEN PLURALITY OF APS BY SELECTING AT LEAST ONE AP SHARING TXOP IN WIRELESS LAN SYSTEM**

(30) Priority: 23.10.2023 KR 20230142198; 07.11.2023 KR 20230152929; 14.11.2023 KR 20230157423; 27.12.2023 KR 20230193091; 12.01.2024 KR 20240005619; 29.02.2024 KR 20240030133; 08.03.2024 KR 20240033452; 20.03.2024 KR 20240038626; 22.04.2024 KR 20240053626
(71) Applicant: LG Electronics Inc., Yeongdeungpo-gu Seoul 07336 (KR)
(72) Inventor: KIM, Geonhwan, Seoul 06772 (KR); CHUN, Jinyoung, Seoul 06772 (KR); CHOI, Jinsoo, Seoul 06772 (KR); JANG, Insun, Seoul 06772 (KR); BAEK, Sunhee, Seoul 06772 (KR); YOON, Yelin, Seoul 06772 (KR); CHA, Dongju, Seoul 06772 (KR)
(74) Representative: Plasseraud IP
(86) International application number: PCT/KR2024/015606
(87) International publication number: WO 2025/089695

(57) **Abstract**

Proposed are a method and device for performing cooperation between a plurality of APs by selecting an AP sharing a TXOP in a wireless LAN system. Specifically, a first AP receives a selection request frame from a second AP. The first AP transmits a selection response frame to the second AP. The second AP selects the first AP as an AP, which will share a TXOP for cooperation between the plurality of APs, on the basis of the selection request frame and the selection response frame.

## Description

### TECHNICAL FIELD

This specification relates to a scheme for performing coordination between a plurality of APs by selecting one or more APs that share a TXOP in a wireless LAN system, and more specifically, to a method and apparatus for transmitting and receiving information required to select the one or more APs that share the TXOP.

### BACKGROUND ART

Next-generation Wi-Fi (e.g., IEEE 802.11be and/or later) aims to support ultra-high reliability when transmitting signals to STAs. To achieve this, various technologies are being considered to support high throughput, low latency, and extended range. For example, multiple APs can cooperate to perform TXOP sharing procedures.

### DISCLOSURE

### TECHNICAL PROBLEM

This specification proposes a method and apparatus for performing coordination between a plurality of APs by selecting one or more APs that share a TXOP in a wireless LAN system.

### TECHNICAL SOLUTION

An example of this specification proposes a method for performing coordination between a plurality of APs by selecting one or more APs that share a TXOP.

The present embodiment may be performed in a network environment where a next-generation wireless LAN system (Ultra High Reliability (UHR)) wireless LAN system or next Wi-Fi) is supported. The next-generation wireless LAN system is a wireless LAN system that improves the 802.11be system and may satisfy backward compatibility with the 802.11be system.

The present embodiment is performed in a first AP, where the first AP is set as a shared AP (DAP) after negotiation in Multi-AP communication, and the second AP may be set as a sharing AP (SAP) after negotiation in Multi-AP communication. The first and second non-AP STAs of the present embodiment may correspond to at least one STA.

The present embodiment proposes a method for performing coordination between a plurality of APs (for example, C-TDMA, C-SR, C-BF, C-OFDMA or J-TX) by selecting one or more APs that share a TXOP. In particular, the present embodiment may determine the necessity of Multi-AP coordination of the DAP in a procedure for selecting one or more APs and determine this, and proposes a method in which the DAP performs a frame exchange with a non-AP STA in a BSS after securing a duration set in a Duration field.

A first access point (AP) receives a selection request frame from a second AP.

The first AP transmits a selection response frame to the second AP.

Based on the selection request frame and the selection response frame, the first AP is selected as an AP to share a Transmit Opportunity (TXOP) for coordination between a plurality of APs.

The selection request frame may include at least one of information on a TXOP duration scheduled by the second AP for the coordination between the plurality of APs, information on a timing when the second AP expects or schedules sharing of the TXOP, information on low-latency traffic that each of the plurality of APs intends to transmit and receive, and information on a priority or a protection level of the coordination between the plurality of APs.

The TXOP duration scheduled by the second AP for the coordination between the plurality of APs may be a nominal TXOP duration scheduled by the second AP for the coordination between the plurality of APs.

In addition, the selection request frame may further include at least one of an identifier of a group for the coordination between the plurality of APs, an identifier of the Shared AP, information on a capability to operate as the Sharing AP, information indicating that the Sharing AP shares the TXOP with the Shared AP, information on a scheme of the coordination between the plurality of APs, address information of the Shared AP, channel information in which the plurality of APs operate, and bandwidth information in which the plurality of APs operate.

The selection response frame may include at least one of an identifier of a group for the coordination between the plurality of APs, an identifier of the Shared AP, address information of the Shared AP, channel information in which the plurality of APs operate, bandwidth information in which the plurality of APs operate, information on a duration of a TXOP that the Shared AP wants to be shared, buffer status information of the Shared AP, information on whether sharing of a TXOP by the Sharing AP is required, information on low-latency traffic transmitted and received by each of the plurality of APs and a status code.

For example, the present embodiment proposes a method for selecting (or determining whether to select) the first AP as a DAP participating in coordination between a plurality of APs by determining whether TXOP sharing (or coordination between APs (for example, C-TDMA, C-SR, C-BF, C-OFDMA or J-TX)) is required for the first AP based on the above-described information in a procedure for selecting one or more APs.

### ADVANTAGEOUS EFFECTS

According to the present embodiment proposed in this specification, the SAP may determine the necessity of coordination for the DAP within the acquired TXOP through a procedure for selecting the one or more APs. Based on the DAP not requiring the coordination, the SAP may decide to perform coordination for a subsequent DAP or may not perform the coordination operation. This has an effect of reducing overhead in a procedure for Multi-AP selection based on the SAP notifying a target DAP of information on TXOP sharing (or coordination).

### BRIEF DESCRIPTION OF THE DRAWINGS

FIG. 1 shows an example of a transmitting apparatus and/or receiving apparatus of the present specification.
FIG. 2 is a conceptual view illustrating the structure of a wireless local area network (WLAN).
FIG. 3 illustrates a general link setup process.
FIG. 4 shows an example of a multi-link (ML).
FIG. 5 shows an example of a physical protocol data unit or physical layer (PHY) protocol data unit (PPDU) transmitted/received by an STA of the present disclosure.
FIG. 6 is a diagram illustrating the layout of resource units (RUs) used for a 20 MHz PPDU.
FIG. 7 is a diagram illustrating the layout of resource units (RUs) used for 40MHz PPDU.
FIG. 8 is a diagram illustrating the layout of resource units (RUs) used for an 80MHz PPDU.
FIG. 9 shows an operation related to UL-MU.
FIG. 10 illustrates an example of channels used/supported/defined within the 2.4 GHz band.
FIG. 11 illustrates an example of channels used/supported/defined within the 5 GHz band.
FIG. 12 illustrates an example of channels used/supported/defined within the 6 GHz band.
FIG. 13 illustrates an example of a modified transmission device and/or receiving device of the present specification.
FIG. 14 illustrates operation according to a conventional STX operation.
FIG. 15 illustrates an example of Coordinated OFDMA (C-OFDMA).
FIG. 16 illustrates an example of Coordinated Beamforming (CBF).
FIG. 17 illustrates an example of AP selection.
FIG. 18 illustrates an example of JTX/JT.
FIG. 19 illustrates an example of an operation of an MU-RTS TXS trigger frame based on a value of a TXOP Sharing Mode subfield being 2.
FIG. 20 illustrates an example of a coordinated TDMA operation.
FIG. 21 illustrates an example of CIRP contents and a CIR field format for an A-Control based on notify method.
FIG. 22 illustrates an example of a Multi-AP selection procedure using a 2.1.1 Request/Response based on selection method.
FIG. 23 illustrates an example of a Multi-AP selection procedure using a 2.1.2 A-Control based on selection method.
FIG. 24 illustrates an example of a Multi-AP selection procedure using a 2.1.3 MU-RTS TF/CTS frame based on selection method.
FIG. 25 illustrates an example of a Multi-AP selection procedure using a 2.1.4 unilateral instruction based on selection method.
FIG. 26 illustrates an example of a Multi-AP selection procedure performed before TXOP acquisition.
FIG. 27 illustrates an example of a method for setting a Duration field of a Multi-AP selection request frame.
FIG. 28 illustrates Example-1 of a Simultaneous Multi-AP selection procedure for selecting a plurality of DAPs.
FIG. 29 illustrates Example-2 of a Simultaneous Multi-AP selection procedure for selecting a plurality of DAPs.
FIG. 30 illustrates Example-3 of a Simultaneous Multi-AP selection procedure for selecting a plurality of DAPs.
FIG. 31 illustrates Example-4 of a Simultaneous Multi-AP selection procedure for selecting a plurality of DAPs.
FIG. 32 illustrates Example-1 of a Sequential Multi-AP selection procedure for selecting a plurality of DAPs.
FIG. 33 illustrates Example-2 of a Sequential Multi-AP selection procedure for selecting a plurality of DAPs.
FIG. 34 illustrates an example of a Simultaneous Multi-AP selection procedure based on Option #1-(5) of section 2.2.2.
FIG. 35 is a procedure flowchart illustrating an operation of a transmitting apparatus according to the present embodiment.
FIG. 36 is a procedure flowchart illustrating an operation of a receiving apparatus according to the present embodiment.
FIG. 37 is a flowchart illustrating a procedure of a method for performing coordination between a plurality of APs by selecting an AP that shares a TXOP (or performs coordination between APs) in terms of a Sharing AP according to the present embodiment.
FIG. 38 is a flowchart illustrating a procedure of a method for performing coordination between a plurality of APs by selecting an AP that shares a TXOP (or performs coordination between APs) in terms of a Shared AP according to the present embodiment.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

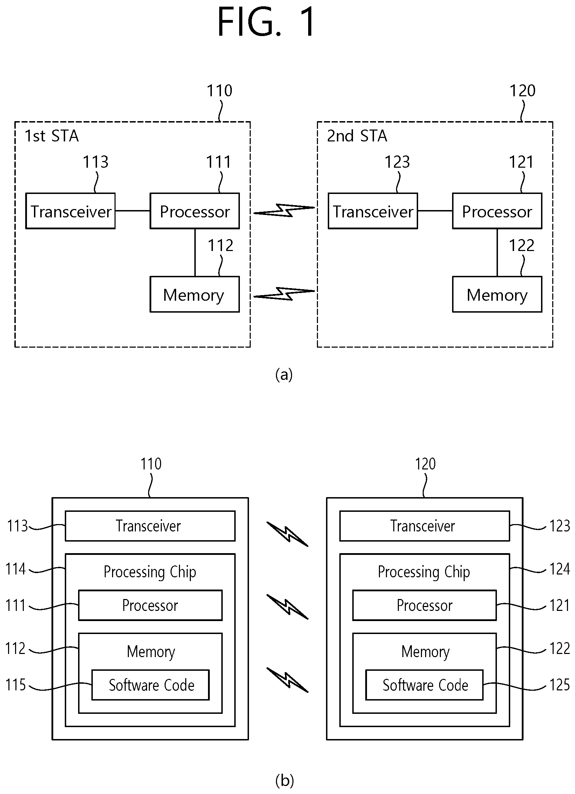

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

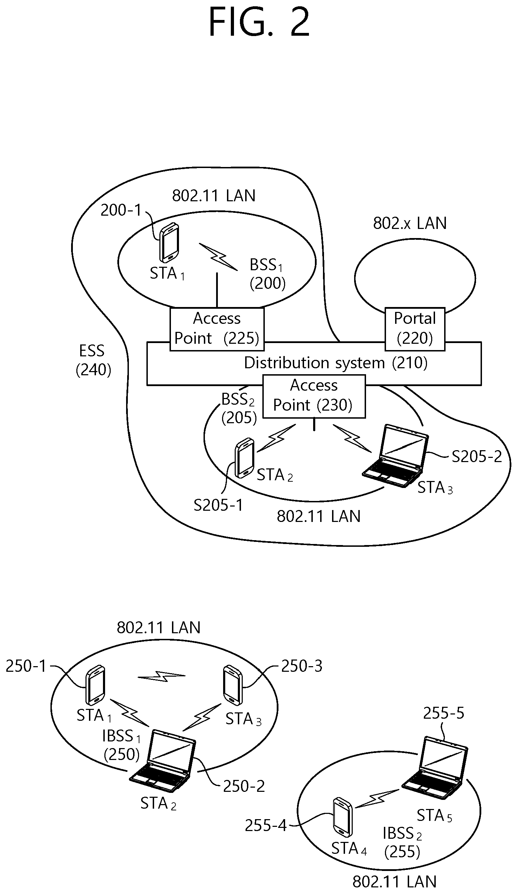

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of anAP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, an AP 225, 230 providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

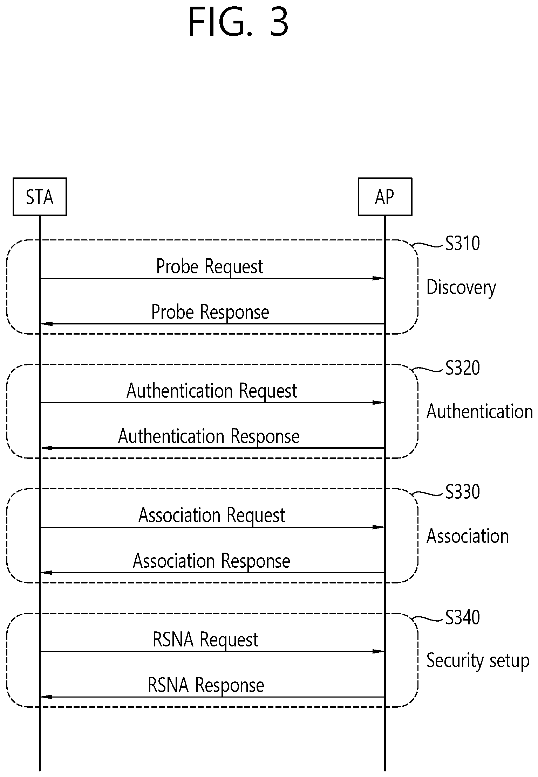

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

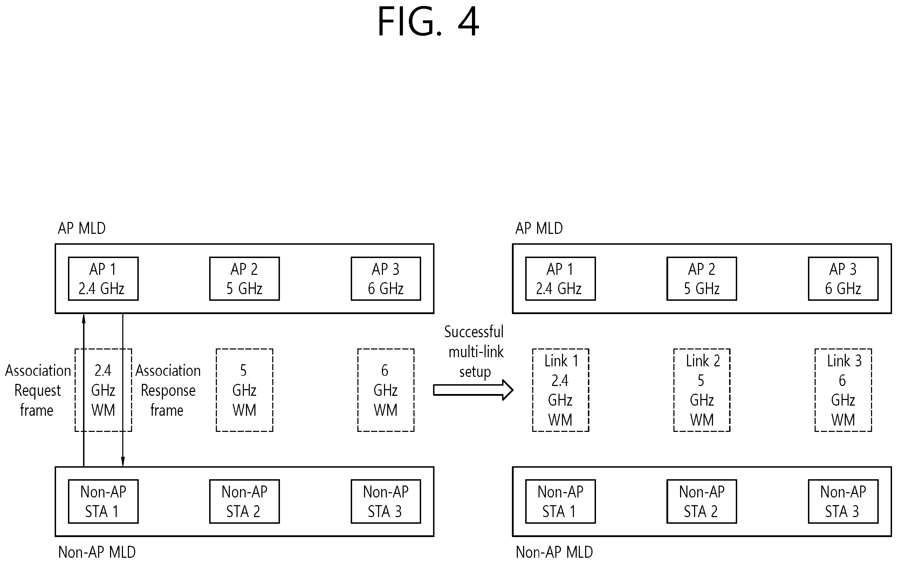

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

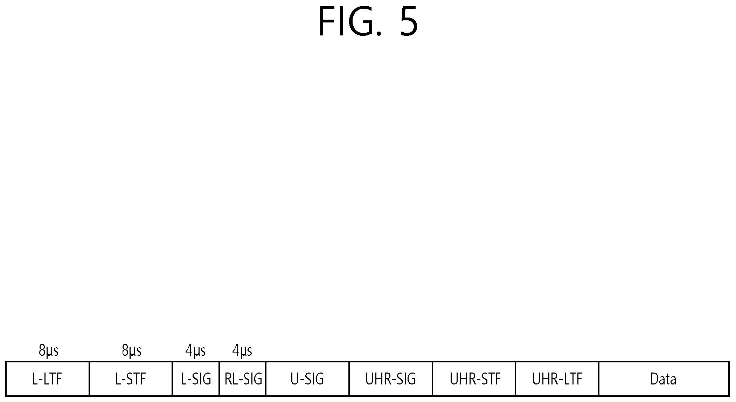

FIG. 5 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 5. The PPDU described in the present disclosure can have, for example, a structure of FIG. 5. In addition, the PPDU described in the present disclosure can be called by various names such as a transmission PPDU, a reception PPDU, a first type or an N^{th} type PPDU, etc. The PPDU described in the present disclosure can be used in a WLAN system defined according to IEEE 802.11bn and/or a next-generation WLAN system that improves IEEE 802.11bn.

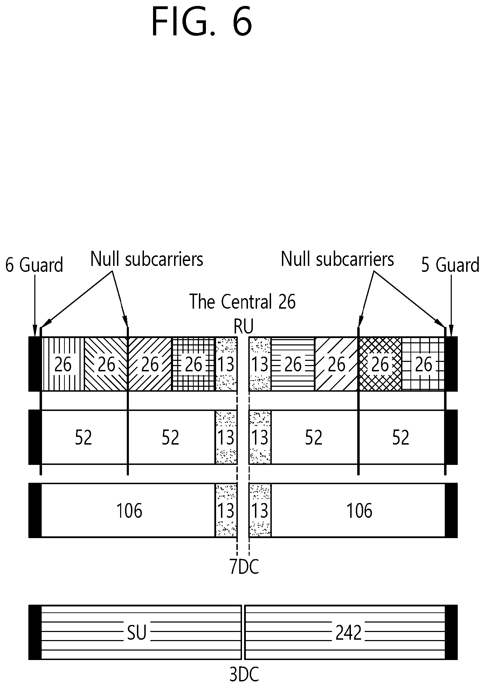

The PPDU of FIG. 5 can be related to various PPDU types used in a UHR system. For example, the example of FIG. 5 can be used for at least one of single-user (SU) mode/type/transmission, multi-user (MU) mode/type/transmission, and null-data packet (NDP) mode/type/transmission related to channel sounding. For example, if the example of FIG. 5 is related to NDP, the data field illustrated can be omitted. If the PPDU of FIG. 5 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 5.

In FIG. 5, L-STF or UHR-LTF may be called a preamble or a physical preamble, and may be generated/transmitted/received/acquired/decoded in the physical layer (included in the transmitting/receiving STA).

Each block illustrated in FIG. 5 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 5.

A subcarrier spacing of the L-STF, L-LTF, L-SIG, RL-SIG, U-SIG, and UHR-SIG fields of FIG. 5 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 5, the L-LTF and the L-STF may be the same as those in the conventional fields (for example, non-HT LTF and non-HT STF defined in conventional WLAN standards).

The L-SIG field of FIG. 5 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index{-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (Co-BF), spatial reuse (SR), type related to coordinated OFDMA (C-OFDMA), type related to coordinated TDMA (Co-TDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 5. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 5 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 5 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

FIG. 6 is a diagram illustrating the layout of resource units (RUs) used for a 20 MHz PPDU. That is, the UHR-LTF, UHR-STF, and/or data fields included in the 20 MHz PPDU may be transmitted/received through at least one of the various RUs defined in FIG. 6.

As illustrated in the uppermost part of FIG. 6, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

Meanwhile, the layout of the RUs in FIG. 6 may be used not only for a multiple users (MUs) but also for a single user (SU), in which case one 242-unit may be used and three DC tones may be inserted as illustrated in the lowermost part of FIG. 6.

Although FIG. 6 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In this specification, N-RU may be represented as N-tone RU, etc. For example, 26-RU may be represented as 26-tone RU.

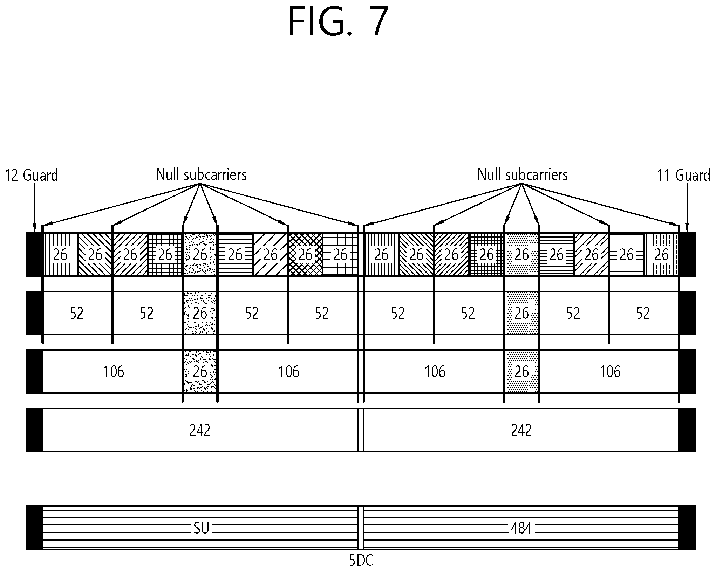

FIG. 7 is a diagram illustrating the layout of resource units (RUs) used for 40MHz PPDU.

Similarly to FIG. 6 in which RUs having various sizes are used, a 26-RU, a 52-RU, a 106-RU, a 242-RU, a 484-RU, and the like may be used in an example of FIG. 7. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 7, when the layout of the RUs is used for a single user, a 484-RU may be used. The specific number of RUs may be changed similarly to FIG. 6.

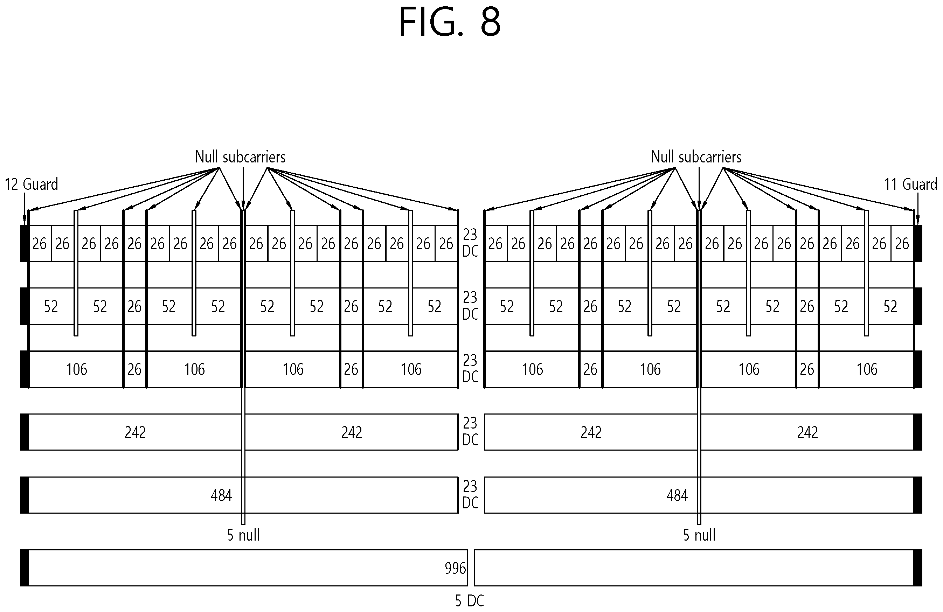

FIG. 8 is a diagram illustrating the layout of resource units (RUs) used for an 80MHz PPDU. The layout of resource units (RUs) used in this specification may vary. For example, the layout of resource units (RUs) used in the 80MHz band may vary.

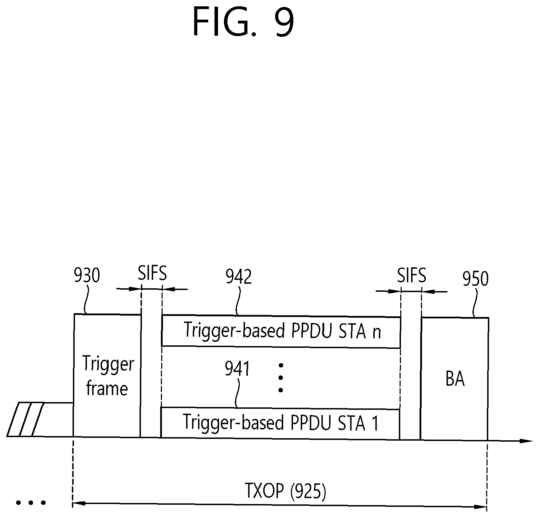

FIG. 9 shows an operation related to UL-MU. As illustrated, a transmitting STA (e.g., AP) can perform channel access through contending (i.e., backoff operation) and transmit a trigger frame (930). That is, the transmitting STA (e.g., AP) can transmit a PPDU including a trigger frame (930). When a PPDU including a trigger frame is received, a TB (trigger-based) PPDU is transmitted after a delay of SIFS.

TB PPDUs (941, 942) are transmitted at the same time and can be transmitted from multiple STAs (e.g., User STAs) whose AIDs are indicated in the Trigger frame (930). The ACK frame (950) for the TB PPDU can be implemented in various forms.

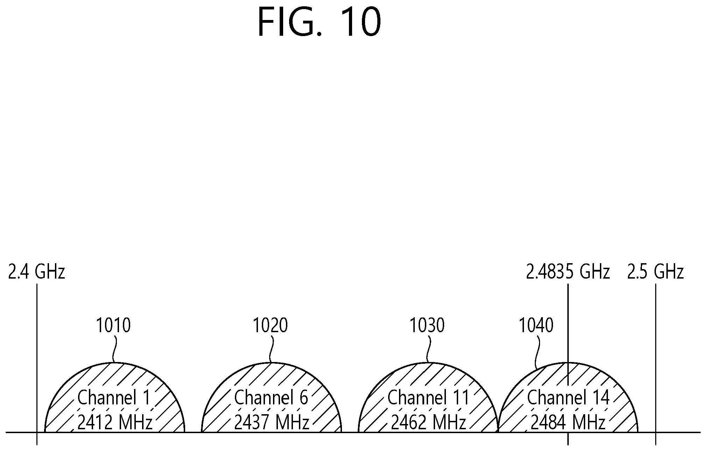

FIG. 10 illustrates an example of channels used/supported/defined within the 2.4 GHz band.

The 2.4 GHz band may also be referred to by other names, such as "first band." Furthermore, the 2.4 GHz band may refer to a frequency range in which channels with center frequencies adjacent to 2.4 GHz (e.g., channels with center frequencies between 2.4 and 2.5 GHz) are used/supported/defined.

The 2.4 GHz band may include multiple 20 MHz channels. The 20 MHz within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. The channel indices may be referred to by various names, such as channel numbers. The specific numerical values of the channel indices and center frequencies may change.

FIG. 10 exemplarily illustrates four channels within the 2.4 GHz band. The illustrated first frequency region (1010) to fourth frequency region (1040) may each include one channel. For example, the first frequency region (1010) may include channel 1 (a 20 MHz channel having an index of 1). In this case, the center frequency of channel 1 may be set to 2412 MHz. The second frequency region (1020) may include channel 6. In this case, the center frequency of channel 6 may be set to 2437 MHz. The third frequency region (1030) may include channel 11. In this case, the center frequency of channel 11 may be set to 2462 MHz. The fourth frequency region (1040) may include channel 14. In this case, the center frequency of channel 14 may be set to 2484 MHz.

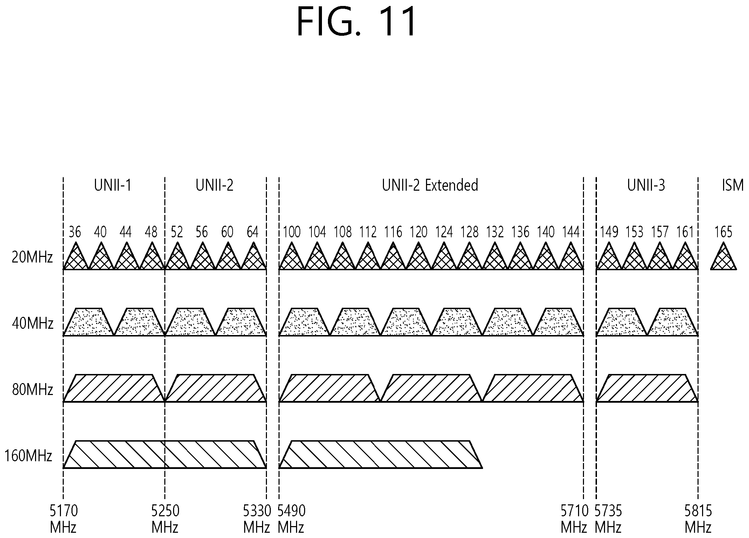

FIG. 11 illustrates an example of channels used/supported/defined within the 5 GHz band.

The 5 GHz band may be referred to by other names, such as a second band/band, etc. The 5 GHz band may refer to a frequency range in which channels with center frequencies greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in FIG. 11 are subject to change.

Multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Within the 5 GHz band, multiple channels can be configured, and the bandwidth of each channel can be variously configured, such as 20 MHz, 40 MHz, 80 MHz, or 160 MHz. For example, the 5170 MHz to 5330 MHz frequency domain/range within UNII-1 and UNII-2 can be divided into eight 20 MHz channels. The 5170 MHz to 5330 MHz frequency domain/range can be divided into four channels through a 40 MHz frequency domain. The 5170 MHz to 5330 MHz frequency domain/range can be divided into two channels through an 80 MHz frequency domain. Alternatively, the 5170 MHz to 5330 MHz frequency domain/range can be divided into one channel through a 160 MHz frequency domain.

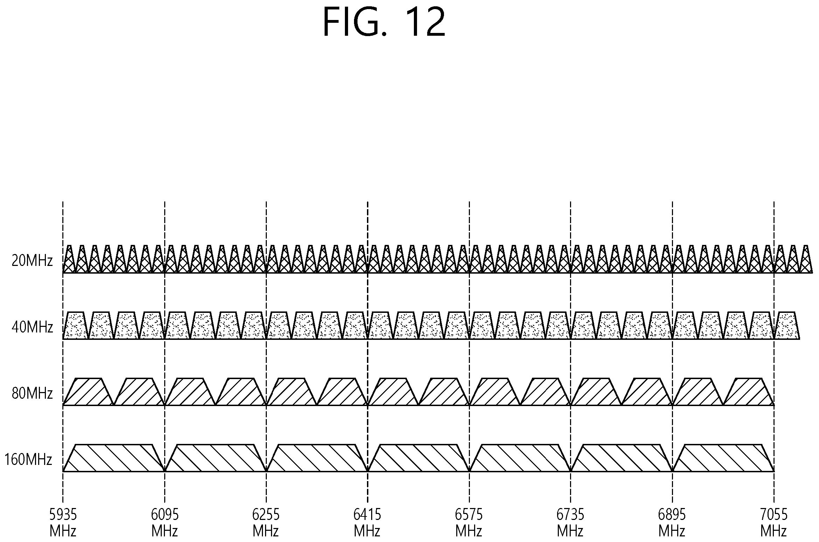

FIG. 12 illustrates an example of channels used/supported/defined within the 6 GHz band.

The 6 GHz band may be referred to by other names, such as the third band/band. The 6 GHz band may refer to a frequency range where channels with center frequencies higher than 5.9 GHz are used, supported, and defined. The specific values shown in FIG. 12 are subject to change.

For example, the 20 MHz channel in FIG. 12 may be defined starting from 5.940 GHz. Specifically, the leftmost channel among the 20 MHz channels in FIG. 12 may have an index of 1 (or channel index, channel number, etc.) and be assigned a center frequency of 5.945 GHz. In other words, the center frequency of channel index N may be determined as (5.940 + 0.005*N) GHz.

Accordingly, the indexes (or channel numbers) of the 20 MHz channels of FIG. 12 may be 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Also, according to the (5.940 + 0.005*N) GHz rule mentioned above, the indexes of the 40 MHz channels in FIG. 12 may be 3, 11, 19, 27, 35, 43, 51, 59, 67, 75, 83, 91, 99, 107, 115, 123, 131, 139, 147, 155, 163, 171, 179, 187, 195, 203, 211, 219, 227.

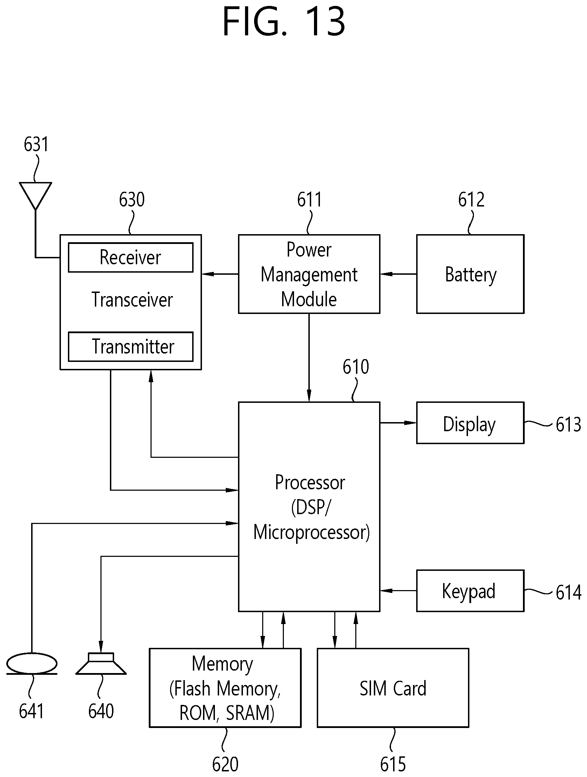

FIG. 13 shows a modified example of a transmitting device and/or a receiving device of the present disclosure.

The devices (e.g., AP STA, non-AP STA) shown in FIGS. 1 to 4 can be modified as shown in FIG. 13. The transceiver 630 of FIG. 13 can be identical to the transceiver 113, 123 of FIG. 1. The transceiver 630 of FIG. 13 can include a receiver and a transmitter.

The processor 610 of FIG. 13 can be identical to the processor 111, 121 of FIG. 1. Alternatively, the processor 610 of FIG. 13 can be identical to the processing chip 114, 124 of FIG. 1.

The memory 150 of FIG. 13 may be the same as the memory 112, 122 of FIG. 1. Alternatively, the memory 150 of FIG. 13 may be a separate external memory different from the memory 112, 122 of FIG. 1.

Referring to FIG. 13, the power management module 611 manages power for the processor 610 and/or the transceiver 630. The battery 612 supplies power to the power management module 611. The display 613 outputs the result processed by the processor 610. The keypad 614 receives input to be used by the processor 610. The keypad 614 may be displayed on the display 613. The SIM card 615 may be an integrated circuit used to securely store an international mobile subscriber identity (IMSI) and its associated keys, which are used to identify and authenticate subscribers in mobile devices such as mobile phones and computers.

Referring to FIG. 13, the speaker (640) may output sound-related results processed by the processor 610. The microphone (641) may receive sound-related input to be used by the processor 610.

Below, the Multi-AP operation applied to this specification is described.

The Multi-AP operation refers to a communication technique involving multiple APs in a WLAN. For example, the Multi-AP operation may refer to an operation in which one or more APs transmit and receive information to one or more STAs. In contrast to the Multi-AP operation, existing techniques may be expressed using various terms, such as STX (Single Transmission). For example, the STX operation may refer to a method in which one BSS AP communicates with one BSS STA. When communication is performed based on the STX operation, interference with adjacent APs (e.g., APs located in an overlapping BSS) may occur. This interference may result in reduced transmission and reception performance for cell-edge users (e.g., non-AP STAs located at the edge of the BSS).

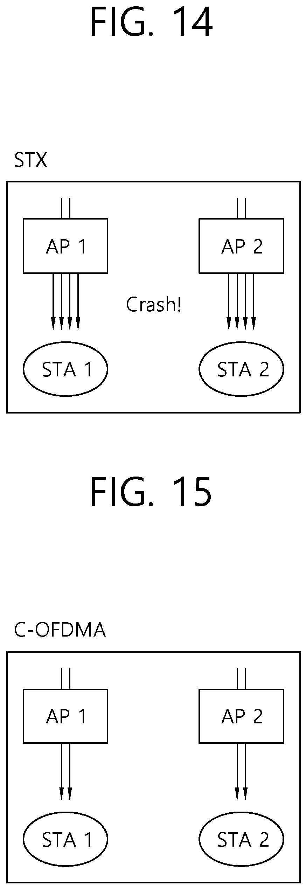

FIG. 14 illustrates operation according to a conventional STX operation. As shown, adjacent AP1 and AP2 can cause interference between STAs and APs.

To improve the STX operation, a new multi-AP operation is proposed. This multi-AP operation can be based on a technology that reduces various interferences, such as inter-symbol interference (ISI), through coordination with neighboring APs (e.g., APs located in an overlapping BSS).

In FIG. 14, STA1 and AP1 may be included in a BSS, and STA2 and AP2 may be included in an OBSS (Overlapping Basic Service Set). That is, STA2 may be an unassociated STA to AP1, and STA1 may be an unassociated STA to AP2.

For example, the Multi-AP operation can be classified into various technologies/types/formats/protocols, etc. For example, the Multi-AP operation can include Coordinated TDMA (C-TDMA) that distinguishes wireless resources allocated to multiple APs based on a time axis (time domain). Additionally or alternatively, the Multi-AP operation can include Coordinated OFDMA (C-OFDMA) that distinguishes wireless resources allocated to multiple APs based on a frequency axis (time domain). Additionally or alternatively, the Multi-AP operation can include Coordinated Spatial Reuse (C-SR) that applies Spatial Reuse (SR) to at least one AP. Additionally or alternatively, the Multi-AP operation can include Coordinated beamforming (CBF)/nulling that nulls and transmits interference generated from neighbors (e.g., adjacent APs/STAs, and/or OBSS APs/OBSS STAs). Additionally or alternatively, the Multi-AP operation may include AP selection in which an AP with a good channel condition among neighboring APs (e.g., at least one AP located within a BSS or OBSS and with a good channel condition) transmits. Additionally or alternatively, the Multi-AP operation may include Joint Transmission (JTX) or JT in which multipleAPs (e.g., multipleAPs included in the same BSS/OBSS, or multiple APs included in different BSS/OBSS) cooperate to perform simultaneous transmission and reception, and JTX/JT may be implemented based on Joint Beamforming or Joint MU-MIMO.

FIG. 15 illustrates an example of Coordinated OFDMA (C-OFDMA). The illustrated AP1 can transmit a PPDU/signal to STA1, and AP2 can transmit a PPDU/signal to STA2. The transmission from AP1 and the transmission from AP2 can be performed in the same/overlapping time interval. The transmission from AP1 to STA1 can be performed based on a first frequency band, and the transmission from AP2 to STA2 can be performed based on a second frequency band different from the second frequency band. For example, in FIG. 15, STA1 and AP1 can be included in a BSS, and STA2 and AP2 can be included in an OBSS. That is, STA2 can be an unassociated STA to AP1, and STA1 can be an unassociated STA to AP2.

Although not illustrated in FIG. 15, an example of Coordinated TDMA (C-TDMA) is also possible. For example, the acquired TXOP can be divided into specific time units (e.g., slots), and the divided slots can be sequentially assigned to multiple different APs.

The above-described C-OFDMA example can be further modified as follows. For example, an AP (e.g., AP1) that has acquired a TXOP can share frequency resources with at least one neighboring AP (e.g., AP2 in the BSS/OBSS). For example, shared frequency resources can be defined on a resource unit (RU) basis or a subchannel basis. For example, for flexibility, frequency resources can be shared from AP1 to AP2 in 20/40/80 MHz subchannels or 242/484/996-tone RU units.

AP1, performing C-OFDMA, can act as a sharing AP or a master AP. That is, AP1 can request at least one neighboring AP (e.g., AP2 in the BSS/OBSS) to report information about the channel and/or buffer status. Based on this, AP1 can obtain a TXOP and share a part of the frequency resource (e.g., a 20 MHz subchannel or a RU of a certain size) with at least one AP in the vicinity (e.g., AP2 existing in the BSS/OBSS) within all or part of the time interval related to the TXOP.

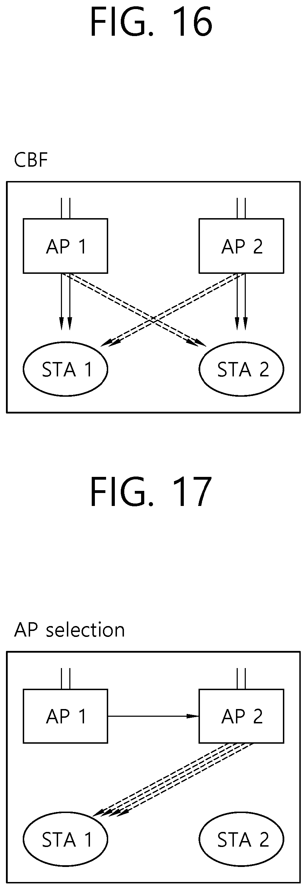

FIG. 16 illustrates an example of Coordinated Beamforming (CBF). The illustrated AP1 may transmit a PPDU/signal to STA1, and AP2 may transmit a PPDU/signal to STA2. The transmission from AP1 and the transmission from AP2 may be performed in the same/overlapping time interval. The transmission from AP1 and the transmission from AP2 may be performed through the same/overlapping frequency band. In order to reduce interference caused to STA2 by AP1, AP1 may perform nulling/beamforming toward STA2, and in order to reduce interference caused to STA1 by AP2, AP2 may perform nulling/beamforming toward STA1. For example, such nulling/beamforming may be implemented in a manner of positioning a radiation null to a neighboring unassociated STA. The above-described nulling/beamforming may make a specific AP invisible to a neighboring unassociated STA. For example, the above-described nulling/beamforming may make AP1 (or AP2) invisible to STA2 (or STA1).

For example, in FIG. 16, STA1 and AP1 may be included in the BSS, while STA2 and AP2 may be included in the OBSS. In other words, STA2 may be an unassociated STA to AP1, and STA1 may be an unassociated STA to AP2.

Although not illustrated in FIG. 16, control signals (e.g., coordination frames) for nulling/beamforming between AP1 and STA2 and/or nulling/beamforming between AP2 and STA1 may be transmitted and received over the backhaul link between AP1 and AP2.

FIG. 17 illustrates an example of AP selection. The illustrated AP2 is judged to have a better channel condition than AP1. AP1 transmits its data/signal to AP2 via a backhaul link, and AP2 can transmit a signal to STA1 instead of AP1. For example, in FIG. 17, STA1 and AP1 may be included in a BSS, and STA2 and AP2 may be included in an OBSS. In other words, STA2 may be an unassociated STA to AP1, and STA1 may be an unassociated STA to AP2.

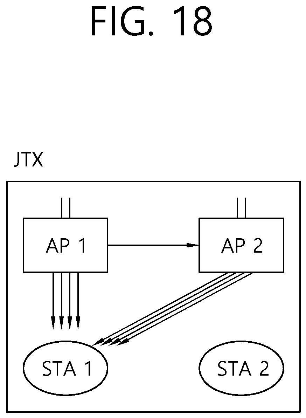

FIG. 18 illustrates an example of JTX/JT. The illustrated AP1 can transmit to STA1 together with AP2. For example, the PPDU/signal transmitted from AP2 to STA1 may be all or part of the same as the PPDU/signal transmitted from AP1 to STA1. For example, the PPDU/signal transmitted from AP2 to STA1 may be simultaneously transmitted through the same/overlapping frequency band as the PPDU/signal transmitted from AP1 to STA1. For example, the PPDU/signal transmitted from AP2 to STA1 may be a signal transmitted from AP1 through a backhaul link. For example, in FIG. 18, STA1 and AP1 may be included in a BSS, and STA2 and AP2 may be included in an OBSS. That is, STA2 may be an unassociated STA to AP1, and STA1 may be an unassociated STA to AP2.

More specifically, in FIG. 18, AP1 can transmit a coordination request (or can be named variously, such as a first request, a control request, etc.) to AP2 and receive a coordination response (or can be named variously, such as a first response, a control response, etc.) from AP2. Through the exchange of the request/response, information about coordination between AP1 and AP2 (e.g., information about whether AP1 and AP2 will perform simultaneous transmission to STA1), information about the point in time when coordination starts, information about the point in time when AP1 and AP2 start simultaneous transmission to STA1, information about data shared between AP1 and AP2, etc. can be exchanged. AP1 can share its data with AP2 via the backhaul link. Thereafter, AP1 can transmit a coordination trigger frame (or can be named variously, such as a trigger frame) to AP2 and perform simultaneous transmission to STA1 based on the trigger frame.

### <Embodiments applicable to this specification>

To enable terminals to maintain continuous WLAN connectivity over a wider area, numerous APs are being installed adjacent to each other. However, overlapping BSSs of multiple APs can lead to issues such as radio interference and transmission collisions between APs. To address these issues, various technologies have been proposed to coordinate APs across frequency, time, and spatial domains (e.g., RU selection, joint transmission, nulling, etc.). Furthermore, attention should be paid to the various issues that may arise during inter-AP coordination.

In EHT (802.11be), a technology was proposed to allocate some time within the TXOP acquired by the AP to support peer-to-peer (P2P) transmission to non-AP STAs. To this end, a new TXOP Sharing Mode subfield was defined in the Common Info field of the existing MU-RTS Trigger frame, and the MU-RTS (Multi User-Request To Send) Trigger frame when this value is nonzero is referred to as an MU-RTS TXOP Sharing (TXS) Trigger frame (TF). If the value of the TXOP Sharing mode is 1, the non-AP STA supports one or more (non-TB) PPDU transmissions to the AP, and if the value of the TXOP Sharing mode is 2, the non-AP STA supports P2P transmission in addition to (non-TB) PPDU transmissions to the AP.

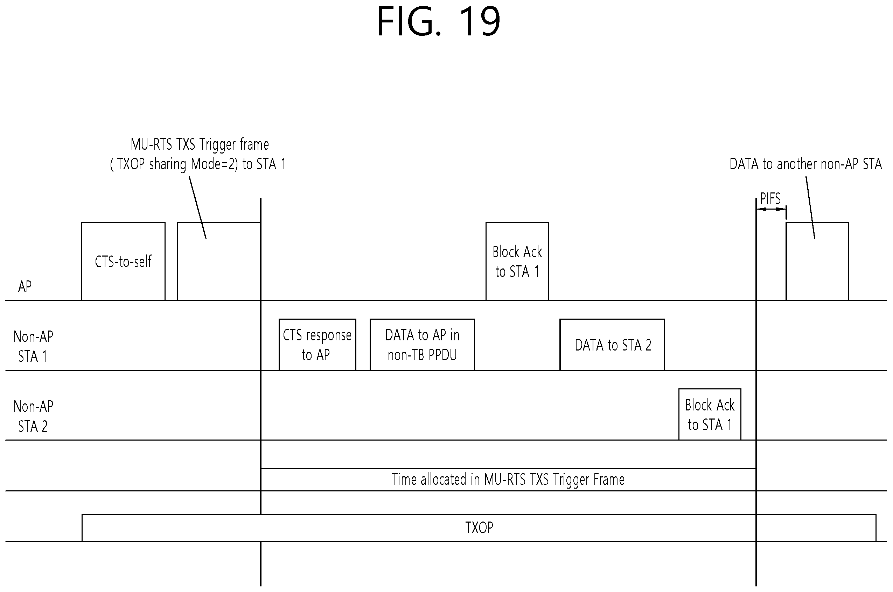

FIG. 19 illustrates an example of an operation of an MU-RTS TXS trigger frame based on a value of a TXOP Sharing Mode subfield being 2.

FIG. 19 illustrates an example of an operation based on a TXOP Sharing mode value being 2. Based on an AP transmitting an MU-RTS TXS TF including time allocation information (Time allocated in MU-RTS TXS Trigger Frame in FIG. 19) to a non-AP STA 1, the non-AP STA 1 may perform a P2P transmission to a non-AP STA 2 after responding with a Clear-To-Send (CTS).

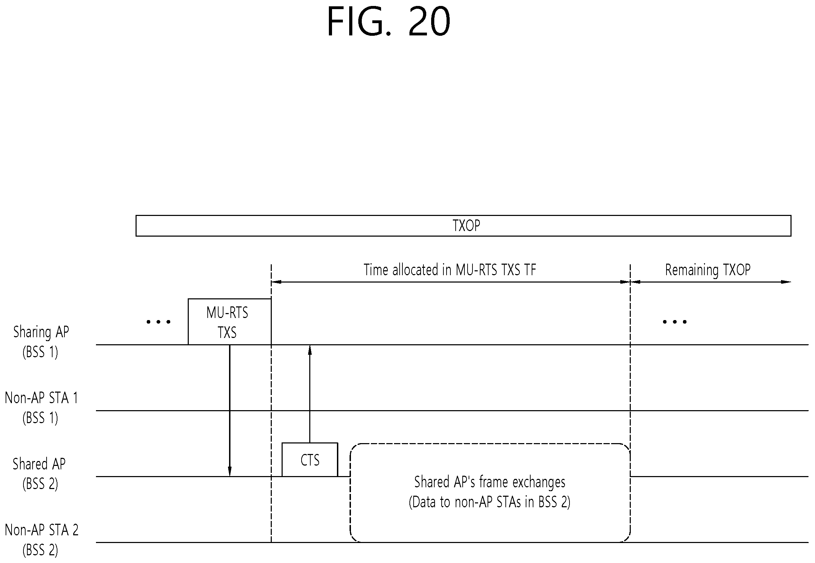

FIG. 20 illustrates an example of a coordinated TDMA operation.

Meanwhile, based on utilizing a conventional Triggered TXOP Sharing protocol for Multi-AP coordination, frame exchange may be performed without affecting each other by distinguishing transmissions within a BSS of each coordinated AP in units of time. For example, FIG. 20 illustrates an example of Coordinated-Time Division Multiplexing Access (C-TDMA) according to a time unit among coordination methods between coordinated APs. At this time, an AP in the conventional Triggered TXS protocol plays a role of an AP sharing a TXOP in a Multi-AP coordination operation, and an STA in the conventional Triggered TXS protocol may play a role of an AP with which the TXOP is shared in the Multi-AP coordination operation. In the present disclosure, an AP sharing a TXOP is referred to as a Sharing AP (SAP), and an AP provided with the TXOP from the SAP is referred to as a Shared AP (DAP). Here, the SAP sharing the TXOP is not limited only to an AP STA and may include a non-AP STA sharing the TXOP. In addition, the DAP with which the TXOP is shared is not limited only to an AP STA and may include a non-AP STA with which the TXOP is shared (or which performs transmission and reception with an AP STA with which the TXOP is shared). Also, a frame exchange between the DAP and a non-AP STA belonging to a DAP BSS or the SAP during a time allocated to the DAP is referred to as a BSS frame exchange (FE) of the DAP. For example, RTS/CTS frame exchange between the DAP and a non-AP STA followed by data frame transmission and block ACK frame response, UL data frame transmission of non-AP STAs for a trigger frame delivered from the DAP or data frame transmission of the DAP for a trigger frame delivered from the SAP may be performed as a frame exchange.

However, for the above-described C-TDMA to be successfully performed, a procedure for a SAP to select a target DAP to share a TXOP within an AP set configure for Multi-AP coordination or a procedure for notifying that the TXOP is scheduled to be shared needs to be performed.

Therefore, this specification proposes a method for performing a Multi-AP selection procedure in a C-TDMA operation.

Through the Multi-AP selection procedure proposed in this specification, the SAP may determine the necessity of TXOP sharing for a DAP within the acquired TXOP, and based on sharing not being required for a specific DAP, the SAP may decide to share the TXOP with a subsequent DAP. Alternatively, C-TDMA may be performed while reducing overhead caused by a selection/reselection procedure by simply notifying a target DAP that the TXOP is scheduled to be shared.

Specific designations (names) proposed in this specification may be changed and are not limited.

This specification describes a procedure for a SAP intending to perform C-TDMA transmission in a Multi-AP environment to select a DAP that is a target of TXOP sharing. Alternatively, the Multi-AP selection procedure described in this specification may be applied and utilized to select a DAP that is a target of resource allocation in coordination between APs (for example, C-SR, C-BF, C-OFDMA or J-TX) in addition to C-TDMA. Specifically, an AP serving as a SAP may deliver a request frame to select a DAP to share a TXOP (or to perform coordination between APs) among coordinated APs operating in C-TDMA, and the target DAP receiving the request frame may deliver a response frame according to the necessity of sharing (or the necessity of Multi-AP coordination). A SAP for which the target DAP does not require TXOP sharing or which does not receive a response frame for the request frame may perform a reselection procedure of sending a request frame to another DAP. Alternatively, a selection procedure in a manner of simply notifying a target DAP that the TXOP is scheduled to be shared may be performed.

The Multi-AP selection procedure for C-TDMA proposed in this specification may operate as follows.

### 1. Multi-AP Selection Procedure for C-TDMA

This section proposes a Multi-AP selection procedure for C-TDMA transmission. Specifically, it may be regarded as a process of notifying a target DAP that a SAP is scheduled to perform TXOP sharing for a C-TDMA operation or a process of determining the target DAP. In addition, variable contents related to Multi-AP coordination or a C-TDMA operation may be updated through frames transmitted and received during the Multi-AP selection process.

### 2.1.1. Request/Response based on Selection Method

An AP performing a SAP role by acquiring a TXOP may transmit a frame (i.e., Selection Request frame) to solicit a response frame from a target DAP to share the TXOP. This frame collectively refers to reusing the structure and specific type of an existing Basic Trigger frame, defining a new type of Trigger frame, or defining a new Control frame or Management frame.

The selection request frame transmitted in the Multi-AP selection process for C-TDMA proposed in this specification may include contents based on one or a combination of a plurality of the following contents. The designations (names) of the contents defined below may be changed and are not limited to specific names.
A. Multi-AP group ID: ID for a set of APs that configure Multi-AP coordination (e.g., 0, 1, 2, ...)
B. DAP ID: ID assigned by a SAP within the configure Multi-AP group (e.g., 0, 1, 2, ...)
C. SAP capability: Indicates whether the corresponding AP is capable of operating as a SAP.

-> For example, utilizing a QoS Characteristic element included in an SCS request/response frame. For example, using Reserved bits (3 bits) within a Control Info field of the QoS Characteristic element. Specifically, a 1-bit signaling is defined to indicate SAP capability information among the corresponding Reserved bits.

bit 0: Indicates that the corresponding AP cannot operate as a SAP.

bit 1: Indicates that the corresponding AP has a capability to operate as a SAP.

For example, utilizing a Common Info field included in a Trigger frame. For example, using EHT Reserved (7 bits) or Reserved bits (4 bits) of the Common Info field. Specifically, a new subfield for Multi-AP coordination is defined using the EHT Reserved, and a 1-bit signaling is defined to indicate SAP capability information within the subfield. Specifically, a 1-bit signaling is defined to indicate SAP capability information using Reserved bits in the Common Info field.

D. SAP operation signaling: Indicates that the corresponding AP currently operates as a SAP and shares a TXOP with a DAP.
-> For example, utilizing a QoS Characteristic element included in a QoS data frame. For example, using Reserved bits (3 bits) within a Control Info field of the QoS Characteristic element. Specifically, a 1-bit signaling is defined to indicate SAP operation signaling information among the corresponding Reserved bits.

bit 0: Indicates that the corresponding AP serves as a SAP but does not perform TXOP sharing.

bit 1: Indicates that the corresponding AP serves as a SAP and performs TXOP sharing with a DAP.

For example, utilizing a Common Info field included in a Trigger frame. For example, using EHT Reserved (7 bits) or Reserved bits (4 bits) of the Common Info field. Specifically, a new subfield for Multi-AP coordination is defined using the EHT Reserved, and a 1-bit signaling is defined to indicate SAP operation signaling information within the subfield. Specifically, a 1-bit signaling is defined to indicate SAP operation signaling information using Reserved bits in the Common Info field.

E. Multi-AP coordination type: Information on Multi-AP coordination transmission schemes such as C-OFDMA, C-TDMA, J-TX and C-SR.

F. Address: Address information of a DAP that is a target of TXOP sharing among participating APs (e.g., BSS color, BSSID for Multi-AP, or information A and B defined above).

G. Operating channel: Information on a primary channel and a punctured channel in operation.
-> For example, information on a channel commonly operating for smooth coordination between APs participating in C-TDMA. For example, information on a primary channel in which APs participating in C-TDMA may commonly operate. Specifically, a new field serving as a CCSF0 field within an EHT Operation Information element may be defined to indicate a channel center frequency index for a 20/40/80 MHz channel.

Specifically, a new field serving as a CCSF0 field within the EHT Operation Information element may be defined to indicate a channel center frequency for a primary 80 MHz channel of a 160 MHz channel or a channel center frequency for a primary 160 MHz channel of a 320 MHz channel.

In addition, a new field serving as a CCSF1 field within the EHT Operation Information element may be defined to indicate a channel center frequency for a 160 MHz channel or a channel center frequency for a 320 MHz channel.
-> For example, information on a punctured channel of an AP participating in C-TDMA.

Specifically, a new field serving as a Disabled Subchannel Bitmap field within the EHT Operation Information element may be defined to indicate a punctured 20 MHz subchannel using a bitmap.

bit value 0 in the bitmap: Indicates that a corresponding 20 MHz subchannel is not punctured.

bit value 1 in the bitmap: Indicates that a corresponding 20 MHz subchannel is punctured.

A primary channel of a DAP may be included within a channel where a SAP operates.

A primary channel of a DAP may be included within an operating channel excluding a punctured channel of a SAP.

H. Operating bandwidth: Information on an operating bandwidth and a maximum bandwidth.
-> For example, bandwidth (BW) information commonly operating for smooth coordination between APs participating in C-TDMA. Specifically, the Operating channel and primary channel information described above may be utilized.

For example, information on a maximum bandwidth of an AP participating in C-TDMA. Specifically, a new field serving as a Channel Width field within a Control field of the EHT Operation Information element may be defined to indicate a channel width, which is BSS BW information of each AP.

Set to 0: Indicates 20 MHz bandwidth.

Set to 1: Indicates 40 MHz bandwidth.

Set to 2: Indicates 80 MHz bandwidth.

Set to 3: Indicates 160/80+80 MHz bandwidth.

Set to 4: Indicates 320/160+160 MHz bandwidth.

The remaining values from 5 to 7 may be reserved.
-> For example, BW field information in a SIG-A field.
-> For example, UL BW field information included in a Common Info field of an MU-RTS TXS TF.

A bandwidth of a DAP may be included within a total bandwidth where a SAP operates.
-> For example, a field for indicating a bandwidth may be newly added by changing/redefining a Medium Time field within the QoS Characteristics element to include a new subfield. Specifically, a new field serving as a Channel Width field within a Control field of the EHT Operation Information element may be defined to indicate a channel width, which is BSS BW information of each AP.

Set to 0: Indicates 20 MHz bandwidth.

Set to 1: Indicates 40 MHz bandwidth.

Set to 2: Indicates 80 MHz bandwidth.

Set to 3: Indicates 160/80+80 MHz bandwidth.

Set to 4: Indicates 320/160+160 MHz bandwidth.

The remaining values from 5 to 7 may be reserved.

I. Scheduled TXOP Duration (Nominal TXOP Duration): A period during which APs participating in a C-TDMA operation perform individual FE (frame exchange) and TXOP sharing while coordinating with each other (or) a nominal TXOP period scheduled by a SAP for a C-TDMA operation.
-> For example, indicated by defining a new field including the Scheduled TXOP Duration. Specifically, a Scheduled Duration field (tentative name) is newly defined to indicate information required for a C-TDMA operation and a Scheduled TXOP Duration value.
-> For example, indicated by defining a new element including the Scheduled TXOP Duration. Specifically, a C-TDMA Operation element (tentative name) is newly defined to indicate information required for a C-TDMA operation and a Scheduled TXOP Duration value.
-> For example, indicated by including the Scheduled TXOP Duration within a QoS Characteristic element that may be used to include negotiation information in a preliminary negotiation process for a C-TDMA operation or an element that may be newly defined for negotiation in C-TDMA.
-> For example, indicated by including the Scheduled TXOP Duration within a UHR Operation element that may be used to include announcement information in an announcement process of each AP for a C-TDMA operation or an element that may be newly defined for announcement in C-TDMA.

J. Expected TXOP sharing timing: A TXOP sharing timing expected or scheduled by a SAP.
-> For example, indicated by defining a new field including the Expected TXOP sharing timing. Specifically, an Expected TXOP sharing timing field (tentative name) is newly defined to indicate information required for a C-TDMA operation and an Expected TXOP sharing timing value.
-> For example, indicated by defining a new element including the Expected TXOP sharing timing. Specifically, a C-TDMA Operation element (tentative name) is newly defined to indicate information required for a C-TDMA operation and an Expected sharing timing value.

K. Low Latency Traffic Information: Information related to low-latency traffic that each AP intends to transmit and receive.
-> For example, utilizing information of a QoS Characteristic element included in an SCS request/response frame. For example, utilizing Delay Bound field information among the information of the QoS Characteristic element. Specifically, a Delay Bound field value for QoS traffic that each AP intends to transmit may be utilized as Low Latency Traffic information. Through this, a SAP may utilize this to check the necessity of TXOP sharing or update an existing value for a DAP capable of completing transmission of an MSDU or A-MSDU within a timing when a TXOP period to be shared ends (i.e., pre-negotiated Low Latency Traffic information or a Delay Bound field value is shorter than an allocated time).
-> For example, utilizing MSDU Lifetime field information among the information of the QoS Characteristic element. Specifically, an MSDU Lifetime field value for QoS traffic that each AP intends to transmit may be utilized as Low Latency Traffic information. Through this, a SAP may utilize this to check the necessity of TXOP sharing or update an existing value for a DAP that does not discard an MSDU within a timing when a TXOP period to be shared ends (i.e., pre-negotiated Low Latency Traffic information or an MSDU Lifetime field value is not expired within an allocated time).
-> For example, utilizing Service Start Time field information among the information of the QoS Characteristic element. Specifically, a Service Start Time field value for QoS traffic that each AP intends to transmit may be utilized as Low Latency Traffic information. Through this, a SAP may utilize this to check the necessity of TXOP sharing or update an existing value for a DAP capable of starting an expected Service Period and frame exchange within a timing when a TXOP period to be shared ends (i.e., pre-negotiated Low Latency Traffic information or a Service Start Time field value is shorter than an allocated time).
-> For example, TXOP sharing request information required/indicated by an AP requiring transmission of Low Latency Traffic. For example, time-bound information of Low Latency Traffic required/indicated by an AP requiring transmission of Low Latency Traffic. For example, a minimum time-bound at which transmission of Low Latency Traffic should start. For example, a maximum time-bound at which transmission of Low Latency Traffic should be successfully completed.
-> For example, arrival rate information of Low Latency Traffic required/indicated by an AP requiring periodic transmission of Low Latency Traffic. For example, an arrival rate of Low Latency Traffic after a last reporting event.
-> For example, low-latency traffic information may include TID (Traffic Identifier)/AC (Access Category) information.

L. Coordination priority: Indicates a priority for coordinated transmission currently operated among Multi-AP coordination schemes, or indicates a priority or protection level for efficient operation of C-TDMA transmission.
-> For example, utilizing EHT Reserved (7 bits) or Reserved (4 bits) of a Common Info field.

Specifically, 2 bits corresponding to the EHT Reserved or Reserved are utilized to indicate a priority (or protection level) of a current C-TDMA operation.
- bit 0: Indicates coordinated transmission with a priority (or protection level) of stage 0. For example, it may mean that separate protection for TXOP sharing and TXOP return is not required in a C-TDMA operation.
- bit 1: Indicates coordinated transmission with a priority (or protection level) of stage 1-1. For example, it may mean that separate protection for TXOP sharing is required in a C-TDMA operation.
- bit 2: Indicates coordinated transmission with a priority (or protection level) of stage 1-2. For example, it may mean that separate protection for TXOP return is required in a C-TDMA operation.
- bit 3: Indicates coordinated transmission with a priority (or protection level) of stage 2. For example, it may mean that protection for both TXOP sharing and TXOP return is required in a C-TDMA operation.

In addition, a selection response frame transmitted in the Multi-AP selection process for C-TDMA proposed in this specification may include contents based on one or a combination of a plurality of the following contents. The designations (names) of the contents defined below may be changed and are not limited to specific names.
A. Multi-AP group ID: ID for a set of APs that configure Multi-AP coordination (e.g., 0, 1, 2, ...)
B. DAP ID: ID assigned from a SAP within the configure Multi-AP group (e.g., 0, 1, 2, ...)
C. Address: Address information of a SAP (e.g., BSS color, BSSID for Multi-AP, or information A and B defined above).
D. Operating channel: Information on a primary channel and a punctured channel in operation.

-> For example, information on a channel commonly operating for smooth coordination between APs participating in C-TDMA.
-> For example, information on a primary channel in which APs participating in C-TDMA may commonly operate.

Specifically, a new field serving as a CCSF0 field within an EHT Operation Information element may be defined to indicate a channel center frequency index for a 20/40/80 MHz channel.

Specifically, a new field serving as a CCSF0 field within the EHT Operation Information element may be defined to indicate a channel center frequency for a primary 80 MHz channel of a 160 MHz channel or a channel center frequency for a primary 160 MHz channel of a 320 MHz channel.

In addition, a new field serving as a CCSF1 field within the EHT Operation Information element may be defined to indicate a channel center frequency for a 160 MHz channel or a channel center frequency for a 320 MHz channel.
-> For example, information on a punctured channel of an AP participating in C-TDMA.

Specifically, a new field serving as a Disabled Subchannel Bitmap field within the EHT Operation Information element may be defined to indicate a punctured 20 MHz subchannel using a bitmap.

bit value 0 in the bitmap: Indicates that a corresponding 20 MHz subchannel is not punctured.

bit value 1 in the bitmap: Indicates that a corresponding 20 MHz subchannel is punctured.
-> A primary channel of a DAP may be included within a channel where a SAP operates.
-> A primary channel of a DAP may be included within an operating channel excluding a punctured channel of a SAP.

E. Operating bandwidth: Information on an operating bandwidth and a maximum bandwidth.
-> For example, BW information commonly operating for smooth coordination between APs participating in C-TDMA.

Specifically, the Operating channel and primary channel information described above may be utilized.
-> For example, information on a maximum bandwidth of an AP participating in C-TDMA.

Specifically, a new field serving as a Channel Width field within a Control field of the EHT Operation Information element may be defined to indicate a channel width, which is BSS BW information of each AP.
- Set to 0: 20 MHz bandwidth.
- Set to 1: 40 MHz bandwidth.
- Set to 2: 80 MHz bandwidth.
- Set to 3: 160/80+80 MHz bandwidth.
- Set to 4: 320/160+160 MHz bandwidth.
- Remaining values from 5 to 7 may be reserved.
   -> For example, BW field information in a SIG-A field.
   -> For example, UL BW field information included in a Common Info field of an MU-RTS TXS TF.
   -> A bandwidth of a DAP may be included within a total bandwidth where a SAP operates.
   -> For example, a field for indicating a bandwidth may be newly added by changing/redefining a Medium Time field within the QoS Characteristics element to include a new subfield.

Specifically, a new field serving as a Channel Width field within a Control field of the EHT Operation Information element may be defined to indicate a channel width, which is BSS BW information of each AP.
- Set to 0: 20 MHz bandwidth.
- Set to 1: 40 MHz bandwidth.
- Set to 2: 80 MHz bandwidth.
- Set to 3: 160/80+80 MHz bandwidth.
- Set to 4: 320/160+160 MHz bandwidth.
- Remaining values from 5 to 7 may be reserved.

F. Required TXOP duration: Information related to a TXOP duration that each DAP wants to be shared.
-> For example, indicated by defining a new field including the Required TXOP Duration.

Specifically, a Required Duration field (tentative name) is newly defined to indicate information required for a C-TDMA operation and a Required TXOP Duration value.
-> For example, indicated by defining a new element including the Required TXOP Duration.

Specifically, a C-TDMA Operation element (tentative name) is newly defined to indicate information required for a C-TDMA operation and a Required TXOP Duration value.
-> For example, indicated by including the Required TXOP Duration within a QoS Characteristic element that may be used to include negotiation information in a preliminary negotiation process for a C-TDMA operation or an element that may be newly defined for negotiation in C-TDMA.
-> For example, indicated by including the Required TXOP Duration within a UHR Operation element that may be used to include announcement information in an announcement process of each AP for a C-TDMA operation or an element that may be newly defined for announcement in C-TDMA.

G. Buffer status: Buffer status information of each DAP.

H. TXOP sharing requirement: Indicates whether TXOP sharing is required based on the expiration of pre-negotiated Low Latency Traffic Information or no need for TXOP sharing (e.g., in a case where an individual FE has already been performed).
-> For example, indicates and responds whether TXOP sharing is required using 1 bit.

- bit 0: Indicates that a DAP receiving a selection request frame does not require TXOP sharing.
- bit 1: Indicates that a DAP receiving a selection request frame requires TXOP sharing.

I. Low Latency Traffic Information: Information related to low-latency traffic that each AP intends to transmit and receive.
-> For example, information of a QoS Characteristic element included in an SCS request/response frame.
-> For example, utilizing Delay Bound field information among the information of the QoS Characteristic element.

Specifically, a Delay Bound field value for QoS traffic that each AP intends to transmit may be utilized as Low Latency Traffic information.
- In a case where it is changed differently from pre-negotiated Low Latency Traffic Information, it includes updated Low Latency Traffic information or a Delay Bound field value.

-> For example, utilizing MSDU Lifetime field information among the information of the QoS Characteristic element.

Specifically, an MSDU Lifetime field value for QoS traffic that each AP intends to transmit may be utilized as Low Latency Traffic information.
- In a case where it is changed differently from pre-negotiated Low Latency Traffic Information, it includes updated Low Latency Traffic information or an MSDU Lifetime field value.

-> For example, utilizing Service Start Time field information among the information of the QoS Characteristic element.

Specifically, a Service Start Time field value for QoS traffic that each AP intends to transmit may be utilized as Low Latency Traffic information.
- In a case where it is changed differently from pre-negotiated Low Latency Traffic Information, it includes updated Low Latency Traffic information or a Service Start Time field value.
   -> For example, TXOP sharing request information required/indicated by an AP requiring transmission of Low Latency Traffic.
   -> For example, time-bound information of Low Latency Traffic required/indicated by an AP requiring transmission of Low Latency Traffic.
- For example, a minimum time-bound at which transmission of Low Latency Traffic should start.
- For example, a maximum time-bound at which transmission of Low Latency Traffic should be successfully completed.
   -> For example, arrival rate information of Low Latency Traffic required/indicated by an AP requiring periodic transmission of Low Latency Traffic.
- For example, an arrival rate of Low Latency Traffic after a last reporting event.
   -> For example, low-latency traffic information may include TID (Traffic Identifier)/AC (Access Category) information.

J. Status Code: Accept/Reject/Recommendation information for a selection request (i.e., a DAP selected by a SAP may accept or reject based on whether current TXOP sharing is required, and this may replace the above-described TXOP sharing requirement information).
-> For example, Accept or Success (e.g., SUCCESS).
-> For example, Reject or Reject including a Recommendation.

Specifically, a Reject code including a Reject reason (e.g., REJECTED_BAD_SUPPORTED_CHANNELS).

Specifically, a Reject code including a Recommendation (e.g., REJECTED_WITH_SUGGESTED_CHANGES).

Based on a value of the Status Code including Reject or Recommendation, it may include information for a new selection request. That is, a DAP receiving a selection request frame may include additional information on the above-described Operating channel and bandwidth, Required TXOP duration, Low Latency Traffic Information and the like.

<Reselection Procedure>: Based on failing to receive a response frame (e.g., selection response frame) from a DAP, there being no TXOP sharing request from a DAP (i.e., TXOP sharing requirement field = 0), or receiving a Status Code including Reject from a DAP, a SAP may perform a reselection procedure. The reselection procedure for a C-TDMA operation may transmit a frame for an individual selection procedure to other candidate DAP(s), or may not perform a separate reselection procedure (i.e., based on failure of one selection procedure, the reselection procedure may not be performed).

### 2.1.2. A-Control based on Selection Method

Similar to the above-described 2.1.1 Request/Response based on selection method in which DAP selection is performed by delivering a selection request frame and receiving a selection response frame therefor, Multi-AP selection using an A-Control field may be performed. For example, a new type of Control Information field may be defined by utilizing Reserved values (7~14) of a Control ID field within a control field.

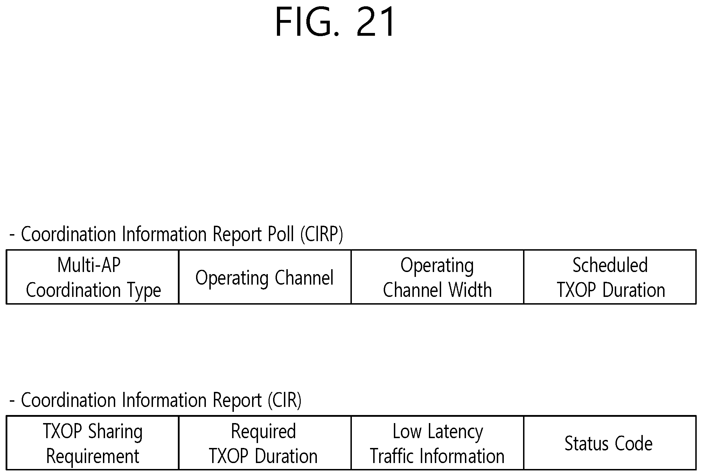

FIG. 21 illustrates an example of CIRP contents and a CIR field format for an A-Control based on notify method.

Specifically, a new type of Trigger frame (e.g., Coordination Information Report Poll (tentative name)) for polling C-TDMA information may be defined (utilizing reserved values 8~15 of a trigger type field) to receive a report on C-TDMA-related information from a DAP. That is, a DAP receiving this may report C-TDMA information to a SAP by including separate report contents in a Coordination Information Report (CIR) Control field (tentative name). For this, a new rule allowing an AP to transmit a TB PPDU needs to be defined. The above-described new type, the CIR Control field, may include contents based on one or a combination of a plurality of the contents defined and listed in the 2.1.1 Request/Response based on selection method as fields. That is, FIG. 21 illustrates an example of contents that may be included in a new type of Trigger frame transmitted from a transmitting side (i.e., SAP) and an example of a CIR Control field that may be included in a receiving side (i.e., DAP). Information (content), the number of bits of a field, or designations (names) that may be included in the Trigger frame and the A-Control field proposed in this example may be changed and are not limited.

### 2.1.3. MU-RTS Trigger frame/CTS frame based on Selection Method

Similar to the above-described 2.1.1 Request/Response based on selection method in which DAP selection is performed by delivering a selection request frame and receiving a selection response frame therefor, Multi-AP selection using an MU-RTS TF or an RTS frame may be performed. For example, an existing mode (e.g., mode = 1 or 2) of an MU-RTS TXS TF may be utilized, or a new mode (e.g., mode = 3) may be defined with reserved bits.

Specifically, an MU-RTS TXS TF of a new mode for notifying a C-TDMA operation may be defined and transmitted to corresponding DAP(s). For this, a new subfield for indicating a new mode, such as a Triggered TXOP Sharing Mode 1 (or 2) Support subfield within an EHT MAC Capabilities Information field, may be defined. The DAP(s) may receive the MU-RTS TXS TF set and indicated as the new mode, acquire information related to a C-TDMA operation, and respond with a CTS frame. In the above-described new mode, the MU-RTS TXS TF, contents based on one or a combination of a plurality of contents that may be included in a selection request frame in the 2.1.1 Request/Response based on selection method may be included in a Common Info field and a User Info field utilizing Reserved bits. Information (content), the number of bits of a field, or designations (names) that may be included in the corresponding field may be changed and are not limited. Based on notifying a plurality of DAP(s) of a C-TDMA operation simultaneously, one or more User Info fields may exist.

Alternatively, a separate signaling bit may be included in an MU-RTS TXS TF to perform a Multi-AP selection procedure using the MU-RTS TXS TF among types of the MU-RTS TF. That is, instead of the above-described new TXS mode, a new signaling bit indicating that the MU-RTS TXS TF is transmitted for a Multi-AP selection procedure in C-TDMA may be defined and added.

<Multi-AP Selection>: Indicates an MU-RTS TXS TF for a Multi-AP selection procedure (or Schedule announcement) in C-TDMA.
-> For example, utilizing EHT Reserved (7 bits) or Reserved (4 bits) of a Common Info field.

Specifically, a new field is defined to indicate that the MU-RTS TXS TF is transmitted for a Multi-AP selection procedure by utilizing 1 bit corresponding to the EHT Reserved.

Specifically, a new field is defined to indicate that the MU-RTS TXS TF is transmitted for a Multi-AP selection procedure by utilizing 1 bit (e.g., B22 in EHT variant Common Info field) corresponding to the Reserved.
-> The above-described examples may commonly perform signaling as follows:
   - bit 0: In a case where the corresponding MU-RTS TXS TF does not aim for a Multi-AP selection procedure. That is, in a case of bit 0, it may mean an MU-RTS TXS TF that may be transmitted for a TXOP sharing purpose to an AP (or STA).
   - bit 1: Indicates that the corresponding MU-RTS TXS TF is transmitted for the purpose of a Multi-AP selection procedure.

In addition, as an alternative to the method of defining a separate signaling bit to perform a Multi-AP selection procedure using an MU-RTS TXS TF, there is a method of using an Allocation Duration field within an MU-RTS TXS TF transmitted by a SAP. For example, a SAP may indicate a timing of TXOP sharing to a target DAP with a duration included in a Duration/ID field of an MU-RTS TXS TF, and may indirectly notify that the MU-RTS TXS TF is transmitted for the purpose of a Multi-AP selection procedure by setting an Allocation Duration field within a User Info field for the target DAP to a pre-defined value (e.g., 0 or a maximum value). This method may be recognized by decoding only by a target DAP (i.e., an AP whose information is included in an AID 12 field of a User Info field).

<Reselection Procedure>: Based on failing to receive a response frame (i.e., CTS frame) from a DAP, a SAP may perform a reselection procedure. The reselection procedure for a C-TDMA operation may transmit a frame for an individual selection procedure to other candidate DAP(s), or may not perform a separate reselection procedure (i.e., based on failure of one selection procedure, the reselection procedure may not be performed).

### 2.1.4. Unilateral Instruction based on Selection Method

An AP performing a SAP role by acquiring a TXOP may transmit a frame that does not solicit a response frame to a target DAP to share the TXOP. That is, unlike the 2.1.1 Request/Response based on selection method that updates or reflects contents by receiving a response frame from a DAP, it may be regarded as unilaterally instructing/notifying a target DAP of a SAP's TXOP sharing decision and related contents. This frame collectively refers to reusing the structure and specific type of an existing Basic Trigger frame, defining a new type of Trigger frame, or defining a new Control frame or Management frame.

As an example of a selection frame (or named as a notification frame) transmitted through this section (2.1.4 Unilateral instruction based on selection method), a Management frame including the following contents may be newly defined. The selection/notification frame may include contents based on one or a combination of a plurality of the following contents, and their designations (names) may be changed and are not limited.

First, a selection/notification frame transmitted through the 2.1.4 Unilateral instruction based on selection method may be classified as an Action frame among types of Management frames. In addition, the selection/notification frame may be classified as a UHR Action frame (tentative name) or a Protected UHR Action frame (tentative name) that may be newly defined in UHR (11bn), similar to an EHT Action frame and a Protected EHT Action frame newly defined in EHT (11be) among Category types of Action frames. That is, the above-described selection/notification frame may be defined as one Action frame among types using an Action field of a UHR Action frame or a Protected UHR Action frame.

Therefore, an AP performing a SAP role by acquiring a TXOP may transmit a selection/notification frame to instruct a target DAP that TXOP sharing for a C-TDMA operation is scheduled.

An Action field of the Selection/Notification frame may include information based on one or a combination of a plurality of the following. The names of the information defined below may be changed and are not limited.
A. Category: A value indicating a Category field defined in an Action field of an Action frame among Management frames.

-> For example, a value indicating an EHT Action frame or a Protected EHT Action frame among a 1-byte Category field.

Specifically, a value indicating a UHR Action frame or a Protected UHR Action frame that may be newly defined in UHR.

B. UHR Action (or) Protected UHR Action: A value indicating an action to be performed with a corresponding frame.
-> For example, a value indicating a Link Reconfiguration Notify frame (example) among a 1-byte Action field within a Protected EHT Action frame.

Specifically, indicated by newly defining a C-TDMA Operation Selection/Notification frame (tentative name) among a 1-byte Action field within a UHR Action frame or a Protected UHR Action frame that may be newly defined in UHR.

C. Multi-AP group ID: ID for a set of APs that configure Multi-AP coordination (e.g., 0, 1, 2, ...)

D. DAP ID: ID assigned from a SAP within the configure Multi-AP group (e.g., 0, 1, 2, ...)

E. SAP capability: Indicates whether a corresponding AP is capable of operating as a SAP.
-> For example, utilizing a QoS Characteristic element included in an SCS request/response frame.
-> For example, using Reserved bits (3 bits) within a Control Info field of the QoS Characteristic element.

Specifically, a 1-bit signaling is defined to indicate SAP capability information among the corresponding Reserved bits.
- bit 0: Indicates that the corresponding AP cannot operate as a SAP.
- bit 1: Indicates that the corresponding AP has a capability to operate as a SAP.
   -> For example, utilizing a Common Info field included in a Trigger frame.
- For example, using EHT Reserved (7 bits) or Reserved bits (4 bits) of the Common Info field.
- Specifically, a new subfield for Multi-AP coordination is defined using the EHT Reserved, and a 1-bit signaling is defined to indicate SAP capability information within the subfield.
- Specifically, a 1-bit signaling is defined to indicate SAP capability information using Reserved bits in the Common Info field.

F. SAP operation signaling: Indicates that a corresponding AP currently operates as a SAP and shares a TXOP with a DAP.
-> For example, utilizing a QoS Characteristic element included in a QoS data frame.
-> For example, using Reserved bits (3 bits) within a Control Info field of the QoS Characteristic element.

Specifically, a 1-bit signaling is defined to indicate SAP operation signaling information among the corresponding Reserved bits.
- bit 0: Indicates that the corresponding AP serves as a SAP but does not perform TXOP sharing.
- bit 1: Indicates that the corresponding AP serves as a SAP and performs TXOP sharing with a DAP.
   -> For example, utilizing a Common Info field included in a Trigger frame.
- For example, using EHT Reserved (7 bits) or Reserved bits (4 bits) of the Common Info field.

Specifically, a new subfield for Multi-AP coordination is defined using the EHT Reserved, and a 1-bit signaling is defined to indicate SAP operation signaling information within the subfield.

Specifically, a 1-bit signaling is defined to indicate SAP operation signaling information using Reserved bits in the Common Info field.

G. Multi-AP coordination type: Information on Multi-AP coordination transmission schemes such as C-OFDMA, C-TDMA, J-TX and C-SR.

H. Address: Address information of a DAP that is a target of TXOP sharing among participating APs (e.g., BSS color, BSSID for Multi-AP, or information A and B defined above).

I. Operating channel: Information on a primary channel and a punctured channel in operation.
-> For example, information on a channel commonly operating for smooth coordination between APs participating in C-TDMA.
-> For example, information on a primary channel in which APs participating in C-TDMA may commonly operate.

Specifically, a new field serving as a CCSF0 field within an EHT Operation Information element may be defined to indicate a channel center frequency index for a 20/40/80 MHz channel.

Specifically, a new field serving as a CCSF0 field within the EHT Operation Information element may be defined to indicate a channel center frequency for a primary 80 MHz channel of a 160 MHz channel or a channel center frequency for a primary 160 MHz channel of a 320 MHz channel.

In addition, a new field serving as a CCSF1 field within the EHT Operation Information element may be defined to indicate a channel center frequency for a 160 MHz channel or a channel center frequency for a 320 MHz channel.
-> For example, information on a punctured channel of an AP participating in C-TDMA.

Specifically, a new field serving as a Disabled Subchannel Bitmap field within the EHT Operation Information element may be defined to indicate a punctured 20 MHz subchannel using a bitmap.
- bit value 0 in the bitmap: Indicates that a corresponding 20 MHz subchannel is not punctured.
- bit value 1 in the bitmap: Indicates that a corresponding 20 MHz subchannel is punctured.
   -> A primary channel of a DAP may be included within a channel where a SAP operates.
   -> A primary channel of a DAP may be included within an operating channel excluding a punctured channel of a SAP.

J. Operating bandwidth: Information on an operating bandwidth and a maximum bandwidth.
-> For example, BW information commonly operating for smooth coordination between APs participating in C-TDMA.

Specifically, the Operating channel and primary channel information described above may be utilized.
-> For example, information on a maximum bandwidth of an AP participating in C-TDMA.

Specifically, a new field serving as a Channel Width field within a Control field of the EHT Operation Information element may be defined to indicate a channel width, which is BSS BW information of each AP.
- Set to 0: 20 MHz bandwidth.
- Set to 1: 40 MHz bandwidth.
- Set to 2: 80 MHz bandwidth.
- Set to 3: 160/80+80 MHz bandwidth.
- Set to 4: 320/160+160 MHz bandwidth.
- Remaining values from 5 to 7 may be reserved.
   -> For example, BW field information in a SIG-A field.
   -> For example, UL BW field information included in a Common Info field of an MU-RTS TXS TF.
   -> A bandwidth of a DAP may be included within a total bandwidth where a SAP operates.
   -> For example, a field for indicating a bandwidth may be newly added by changing/redefining a Medium Time field within the QoS Characteristics element to include a new subfield.

Specifically, a new field serving as a Channel Width field within a Control field of the EHT Operation Information element may be defined to indicate a channel width, which is BSS BW information of each AP.
- Set to 0: 20 MHz bandwidth.
- Set to 1: 40 MHz bandwidth.
- Set to 2: 80 MHz bandwidth.
- Set to 3: 160/80+80 MHz bandwidth.
- Set to 4: 320/160+160 MHz bandwidth.
- Remaining values from 5 to 7 may be reserved.

K. Scheduled TXOP Duration: A period during which APs participating in a C-TDMA operation perform individual FE and TXOP sharing while coordinating with each other (or) a nominal TXOP period scheduled by a SAP for a C-TDMA operation.
-> For example, indicated by defining a new field including the Scheduled TXOP Duration.

Specifically, a Scheduled Duration field (tentative name) is newly defined to indicate information required for a C-TDMA operation and a Scheduled TXOP Duration value.
-> For example, indicated by defining a new element including the Scheduled TXOP Duration.

Specifically, a C-TDMA Operation element (tentative name) is newly defined to indicate information required for a C-TDMA operation and a Scheduled TXOP Duration value.
-> For example, indicated by including the Scheduled TXOP Duration within a QoS Characteristic element that may be used to include negotiation information in a preliminary negotiation process for a C-TDMA operation or an element that may be newly defined for negotiation in C-TDMA.
-> For example, indicated by including the Scheduled TXOP Duration within a UHR Operation element that may be used to include announcement information in an announcement process of each AP for a C-TDMA operation or an element that may be newly defined for announcement in C-TDMA.

L. Expected TXOP sharing timing: A TXOP sharing timing expected or scheduled by a SAP.
-> For example, indicated by defining a new field including the Expected TXOP sharing timing.

Specifically, an Expected TXOP sharing timing field (tentative name) is newly defined to indicate information required for a C-TDMA operation and an Expected TXOP sharing timing value.
-> For example, indicated by defining a new element including the Expected TXOP sharing timing.

Specifically, a C-TDMA Operation element (tentative name) is newly defined to indicate information required for a C-TDMA operation and an Expected sharing timing value.

M. Coordination priority: Indicates a priority for coordinated transmission currently operated among Multi-AP coordination schemes, or indicates a priority or protection level for efficient operation of C-TDMA transmission.
-> For example, utilizing EHT Reserved (7 bits) or Reserved (4 bits) of a Common Info field.

Specifically, 2 bits corresponding to the EHT Reserved or Reserved are utilized to indicate a priority (or protection level) of a current C-TDMA operation.
- bit 0: Indicates coordinated transmission with a priority (or protection level) of stage 0. For example, it may mean that separate protection for TXOP sharing and TXOP return is not required in a C-TDMA operation.
- bit 1: Indicates coordinated transmission with a priority (or protection level) of stage 1-1. For example, it may mean that separate protection for TXOP sharing is required in a C-TDMA operation.
- bit 2: Indicates coordinated transmission with a priority (or protection level) of stage 1-2. For example, it may mean that separate protection for TXOP return is required in a C-TDMA operation.
- bit 3: Indicates coordinated transmission with a priority (or protection level) of stage 2. For example, it may mean that protection for both TXOP sharing and TXOP return is required in a C-TDMA operation.

Alternatively, a new element (e.g., UHR Operation element (tentative name), C-TDMA Operation element (tentative name), Multi-AP Coordination element (tentative name)) may be defined to include the above-described contents C to I required for Multi-AP cooperation and a C-TDMA operation. Therefore, as an example (i.e., Management frame) for the selection/notification frame defined in this section, the above-described Action field may be represented as an example such as [Table 1] below.

**[Table 1]**

| **Order** | **Meaning** |
|---|---|
| 1 | Category |
| 2 | UHR Action (or) Protected UHR Action (or) Public Action |
| 3 | A new field including the above C~I contents or an individual new field |
| | (or) Definition and utilization of a new element for the Selection frame |
| | (e.g., UHR Operation element, C-TDMA Operation element, Multi-AP Coordination element) |

### 2. Multi-AP Selection Methods and Embodiments for C-TDMA Transmission

For efficient C-TDMA operation, it is necessary to design a procedure for a SAP to select a target DAP to share a TXOP within an AP set that has configure Multi-AP coordination, or a procedure to notify that TXOP sharing is scheduled to be performed. Therefore, this section presents methods for performing a Multi-AP selection procedure in C-TDMA.

### 2.2.1. Embodiments of Multi-AP Selection Procedures According to Various Selection Methods

Among APs that have established Multi-AP coordination and are included/participating in a set, a Multi-AP selection method for selecting or notifying DAP(s) to share a TXOP may be performed according to the following examples. The Multi-AP selection procedures presented below may be performed by replacing a NAV-set sequence of a SAP. That is, an AP capable of acting as a SAP by acquiring a TXOP may set a NAV through a Multi-AP selection procedure (for example, the first frame exchange sequence of the SAP may be a Multi-AP selection procedure).

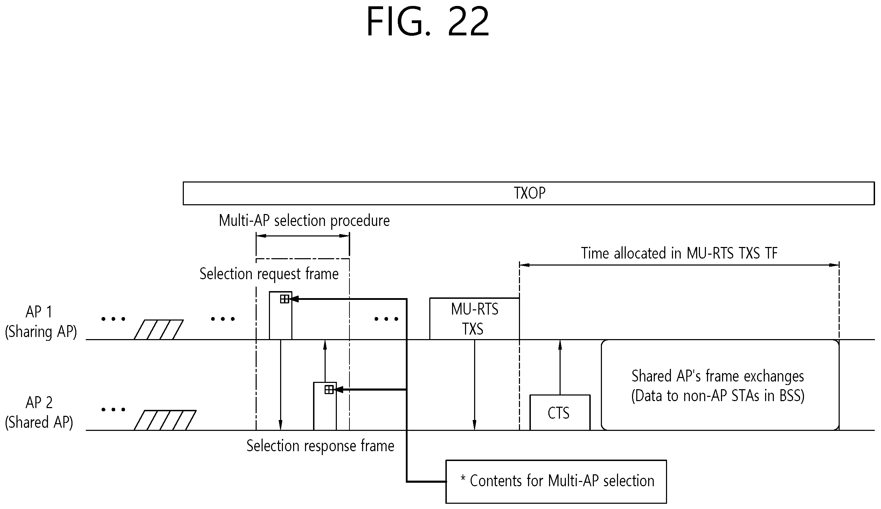

FIG. 22 illustrates an example of a Multi-AP selection procedure using a 2.1.1 Request/Response based on selection method.

FIG. 22 illustrates an embodiment of a Multi-AP selection procedure using the Request/Response based on selection method of section 2.1.1. An AP performing a SAP role by acquiring a TXOP may transmit a selection request frame, including the contents for Multi-AP selection described in section 2.1.1, to a target DAP to share the TXOP. In this case, based on an RA field of the selection request frame being designated as an address of an individual DAP, an AID field may be set to an arbitrary value. Corresponding DAP(s) receiving this may update information based on updated information being present, and may respond with a selection response frame by determining whether to accept a request for coordination between APs (for example, C-SR, C-BF, C-OFDMA, etc.) through the necessity of TXOP sharing or a Status Code. At this time, an issue may occur where non-AP STA(s) connected to the SAP receive and detect the response frame delivered from the DAP(s) and set a basic NAV. To solve this, a method of setting a Duration field value of the request frame transmitted by the SAP to 0, or a method of including only address information of the SAP (e.g., MAC address or AID of the SAP, or a new AID defined for Multi-AP coordination) in an address field of the response frame transmitted by the DAP, may be applied. DAP(s) selected by the SAP may wait without doing anything until a scheduled TXOP sharing timing, perform Secondary Channel Access according to capability, or enter an AP Power mode. In addition, DAP(s) that are not scheduled to receive TXOP sharing from the SAP may recognize that the SAP is scheduled to share the TXOP with other DAP(s) based on hearing the selection request frame. AP(s) not selected by the SAP may defer access to a corresponding channel during a time allocated to the selected DAP(s) or during a total TXOP duration of the SAP. Alternatively, the AP(s) not selected by the SAP may perform Secondary Channel Access according to capability or enter the AP Power mode during the corresponding time. Here, the AP(s) not selected by the SAP refer to AP(s) that are in a coordination relationship with the SAP but are not selected in the current TXOP.

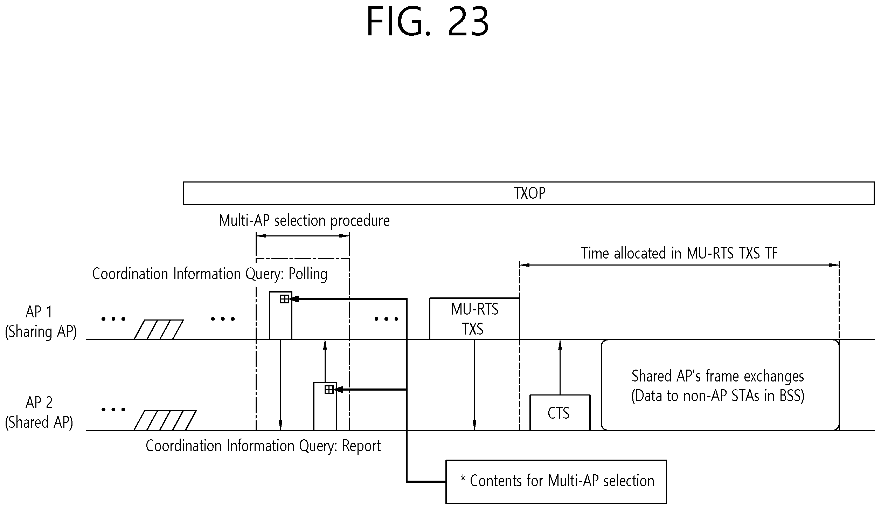

FIG. 23 illustrates an example of a Multi-AP selection procedure using a 2.1.2 A-Control based on selection method.

Alternatively, FIG. 23 illustrates an embodiment of a Multi-AP selection procedure using the A-Control based on selection method of section 2.1.2. An AP performing a SAP role by acquiring a TXOP may transmit a Trigger frame (CIRP frame), including the contents for Multi-AP selection described in section 2.1.2, to a target DAP to share the TXOP. In this case, based on an RA field of the CIRP frame being designated as an address of an individual DAP, an AID field may be set to an arbitrary value. Corresponding DAP(s) receiving this may update information based on updated information being present, and may respond with a TB PPDU (CIR frame) by determining the necessity of TXOP sharing or the necessity of coordination between APs (for example, C-SR, C-BF, C-OFDMA, etc.). At this time, an issue may occur where non-AP STA(s) connected to the SAP receive and detect the TB PPDU (CIR frame) delivered from the DAP(s) and set a basic NAV. To solve this, a method of setting a Duration field value of the Trigger frame (CIRP frame) transmitted by the SAP to 0, or a method of including only address information of the SAP (e.g., MAC address or AID of the SAP, or a new AID defined for Multi-AP coordination) in an address field of the TB PPDU (CIR frame) transmitted by the DAP, may be applied. DAP(s) selected by the SAP may wait without doing anything until a scheduled TXOP sharing timing, perform Secondary Channel Access according to capability, or enter an AP Power mode. In addition, DAP(s) that are not scheduled to receive TXOP sharing from the SAP may recognize that the SAP is scheduled to share the TXOP with other DAP(s) based on hearing the CIRP frame. AP(s) not selected by the SAP may defer access to a corresponding channel during a time allocated to the selected DAP(s) or during a total TXOP duration of the SAP. Alternatively, the AP(s) not selected by the SAP may perform Secondary Channel Access according to capability or enter the AP Power mode during the corresponding time.

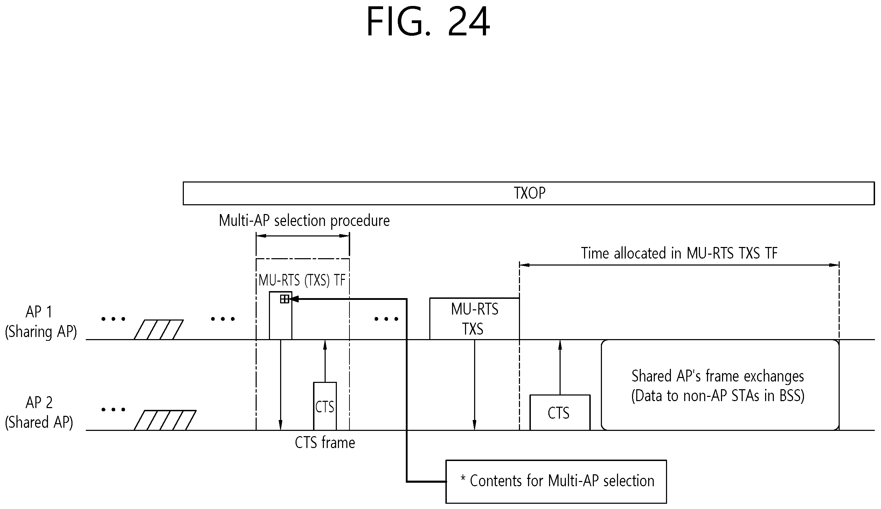

FIG. 24 illustrates an example of a Multi-AP selection procedure using a 2.1.3 MU-RTS TF/CTS frame based on selection method.

Alternatively, FIG. 24 illustrates an embodiment of a Multi-AP selection procedure using the MU-RTS TF/CTS frame based on selection method of section 2.1.3. An AP performing a SAP role by acquiring a TXOP may transmit an MU-RTS TXS TF, including the contents for Multi-AP selection described in section 2.1.3, to a target DAP to share the TXOP. In this case, based on an RA field of the MU-RTS TXS TF being designated as an address of an individual DAP, an AID field may be set to an arbitrary value. Corresponding DAP(s) may acquire C-TDMA related information from the received MU-RTS TXS TF and may respond with a CTS frame. DAP(s) selected by the SAP may wait without doing anything until a scheduled TXOP sharing timing, perform Secondary Channel Access according to capability, or enter an AP Power mode. In addition, DAP(s) that are not scheduled to receive TXOP sharing from the SAP may recognize that the SAP is scheduled to share the TXOP with other DAP(s) based on hearing the MU-RTS TXS TF and CTS frame. AP(s) not selected by the SAP may defer access to a corresponding channel during a time allocated to the selected DAP(s) or during a total TXOP duration of the SAP. Alternatively, the AP(s) not selected by the SAP may perform Secondary Channel Access according to capability or enter the AP Power mode during the corresponding time.

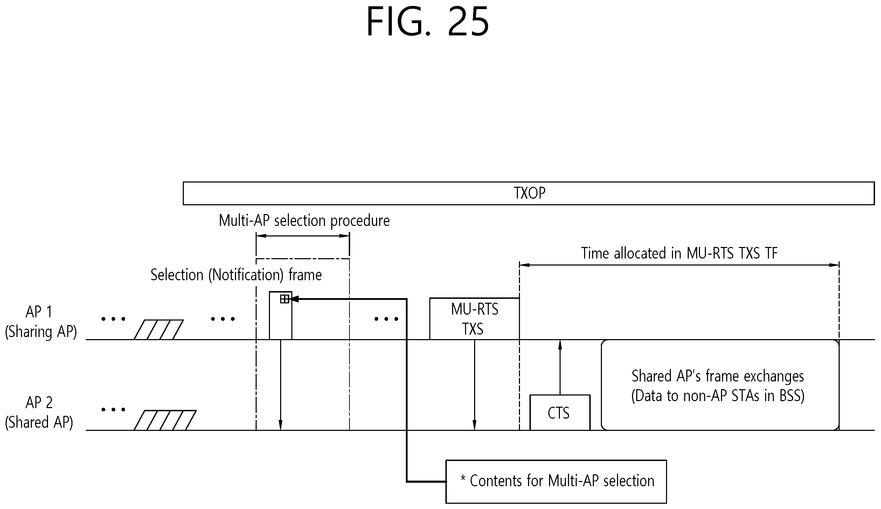

FIG. 25 illustrates an example of a Multi-AP selection procedure using a 2.1.4 unilateral instruction based on selection method.

Alternatively, FIG. 25 illustrates an embodiment of a Multi-AP selection procedure using the unilateral instruction based on selection method of section 2.1.4. An AP performing a SAP role by acquiring a TXOP may transmit a selection/notification frame, including the contents for Multi-AP selection described in section 2.1.4, to a target DAP to share the TXOP. In this case, based on an RA field of the selection/notification frame being designated as an address of an individual DAP, an AID field may be set to an arbitrary value. Corresponding DAP(s) receiving this may recognize in advance whether sharing is performed or whether coordination between APs (for example, C-SR, C-BF, C-OFDMA, etc.) is performed, and may prepare for a C-TDMA operation or coordination between APs (for example, C-SR, C-BF, C-OFDMA, etc.) based on the delivered information. DAP(s) selected by the SAP may wait without doing anything until a scheduled TXOP sharing timing, perform Secondary Channel Access according to capability, or enter an AP Power mode. In addition, DAP(s) that are not scheduled to receive TXOP sharing from the SAP may recognize that the SAP is scheduled to share the TXOP with other DAP(s) based on hearing the corresponding selection/notification frame. AP(s) not selected by the SAP may defer access to a corresponding channel during a time allocated to the selected DAP(s) or during a total TXOP duration of the SAP. Alternatively, the AP(s) not selected by the SAP may perform Secondary Channel Access according to capability or enter the AP Power mode during the corresponding time.

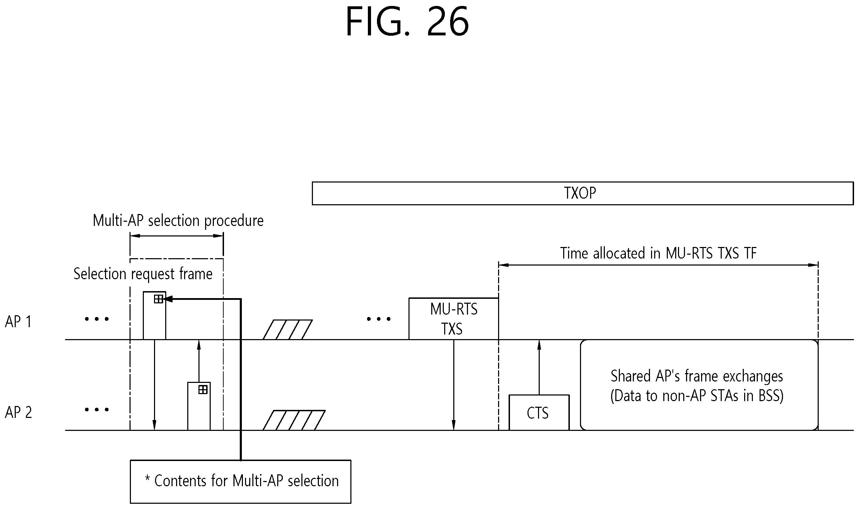

FIG. 26 illustrates an example of a Multi-AP selection procedure performed before TXOP acquisition.

As another alternative, FIG. 26 illustrates an embodiment of a Multi-AP selection procedure performed prior to TXOP acquisition. Before acquiring a TXOP, each AP belonging to a set of APs that have established Multi-AP coordination (where a SAP role is not yet determined) may perform a Multi-AP selection procedure to pre-determine DAP(s) to share the TXOP or perform coordination between APs (for example, C-SR, C-BF, C-OFDMA, etc.) based on pre-negotiated information once the TXOP is acquired. For such a Multi-AP selection procedure, the Request/Response based on, A-Control based on, MU-RTS TF/CTS frame based on, or unilateral instruction based on selection methods described above may be utilized. In this case, contents within a frame transmitted for the Multi-AP selection procedure may be different from the contents presented in sections 2.1.1, 2.1.2, 2.1.3 and 2.1.4.

On the other hand, a Multi-AP selection procedure for C-TDMA presented in sections 2.1 and 2.2 may be omitted in the following situations. Conditions and situations in which the Multi-AP selection procedure is omitted may be added and are not limited.
- Based on a SAP performing TXOP sharing immediately upon acquiring the TXOP.
- Based on feedback (i.e., response) from a DAP not being required.
- Based on only one negotiated AP existing through a Multi-AP set configuration procedure.

### 2.2.2. Method of Setting Duration Field in Multi-AP Selection Procedure

In a Multi-AP selection procedure based on various selection methods presented in section 2.2.1, a Duration field of a request frame transmitted by a SAP may include only a duration until receiving a response frame for the request frame, a duration including a subsequent FE for a BSS of the SAP, a time for transmitting an MU-RTS TXS TF for a TXOP sharing procedure or a duration until transmitting an MU-RTS TXS TF for a TXOP sharing procedure and receiving a CTS frame, which is a response frame therefor.

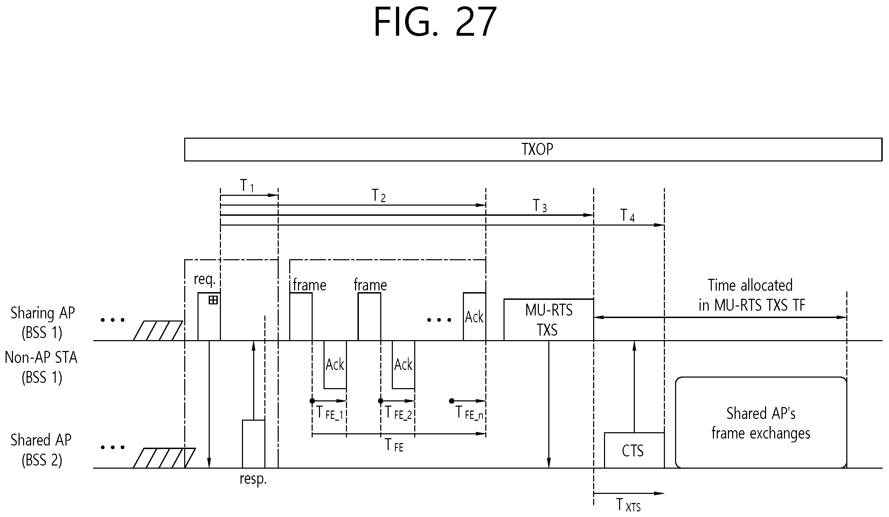

FIG. 27 illustrates an example of a method for setting a Duration field of a Multi-AP selection request frame.

FIG. 27 collectively illustrates various examples of methods for setting a Duration field in a Multi-AP selection procedure. Option #1 includes a period (e.g., T_1) until receiving a response frame in the Multi-AP selection procedure in the Duration field of a request frame.

Durations in sequences following the Multi-AP selection procedure of Option #1 may be set as follows:
-> Option #1-(1): A total period for performing an FE within a BSS of a SAP and a period for a TXOP sharing procedure may be set separately.

Specifically, T_FE may be included in a Duration field of a first frame for the FE within the BSS of the SAP, and T_TXS may be included in a Duration field of an MU-RTS TXS TF for TXOP sharing.
-> Option #1-(2): An individual FE period within the BSS of the SAP and a period for the TXOP sharing procedure may be set separately.

Specifically, an individual period may be included for each transmission and reception of a frame within the BSS of the SAP, and T_(FE_1), T_(FE_2), and T_(FE_n) represent one example. Subsequently, T_TXS may be included in the Duration field of the MU-RTS TXS TF for TXOP sharing.
-> Option #1-(3): A period including an individual FE period within the BSS of the SAP and a period for transmission of the MU-RTS TXS TF may be set.

Specifically, a period corresponding to T_3 - T_1 may be included in the Duration field of the first frame for the FE within the BSS of the SAP.
-> Option #1-(4): A period including an individual FE period within the BSS of the SAP and a period for receiving a response frame (e.g., CTS frame) for the MU-RTS TXS TF may be set.

Specifically, a period corresponding to T_4 - T_1 may be included in the Duration field of the first frame for the FE within the BSS of the SAP.

Somewhat differently from the methods of Option #1-(1) to Option #1-(4), a method of setting a NAV duration differently only for a specific AP may be considered.
-> Option #1-(5): Based on a Trigger frame (e.g., MU-RTS (TXS) TF) being transmitted as a Multi-AP selection request frame, identification information of an AP that is a target of TXOP sharing (e.g., DAP's MAC address, BSS color, Multi-AP ID, etc.) may be included in an AID field of a User Info field. One or more APs including corresponding information do not set a NAV duration based on a Duration/ID field, but may set the NAV duration based on Expected TXOP sharing timing information that may be included in the User Info field or a Common Info field. The Expected TXOP sharing timing information was proposed in section 2.1 and may represent information on a TXOP sharing timing expected or scheduled by the SAP.

Option #2 includes a period (e.g., T_2) until completing the Multi-AP selection procedure and the FE within the BSS of the SAP. In addition, Option #3 includes the aforementioned period and a period (e.g., T_3) until a transmission timing of an MU-RTS TXS TF transmitted for the purpose of TXOP sharing for C-TDMA. Option #4 includes a period (e.g., T_4) until receiving a response frame (e.g., CTS frame) for the transmission of the MU-RTS TXS TF.

### 2.3. Multi-AP Selection Methods and Embodiments for Multiple DAPs

This section presents methods and procedures for performing Multi-AP selection for a plurality of DAPs.

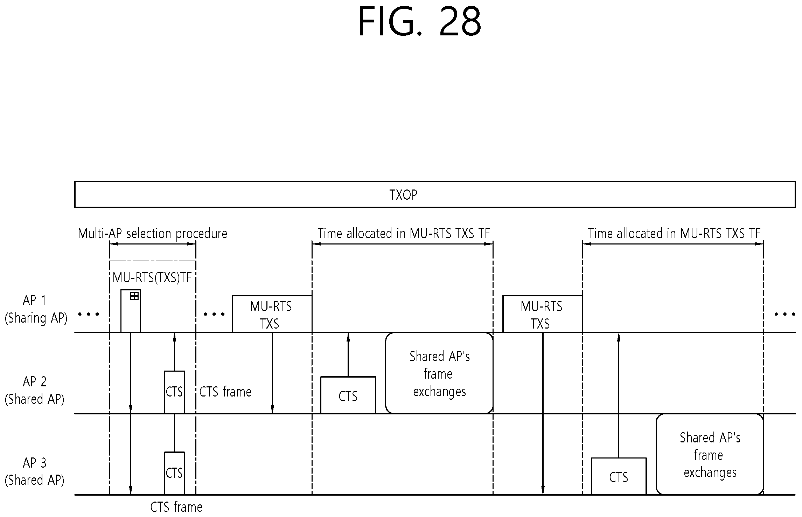

FIG. 28 illustrates Example-1 of a Simultaneous Multi-AP selection procedure for selecting a plurality of DAPs.

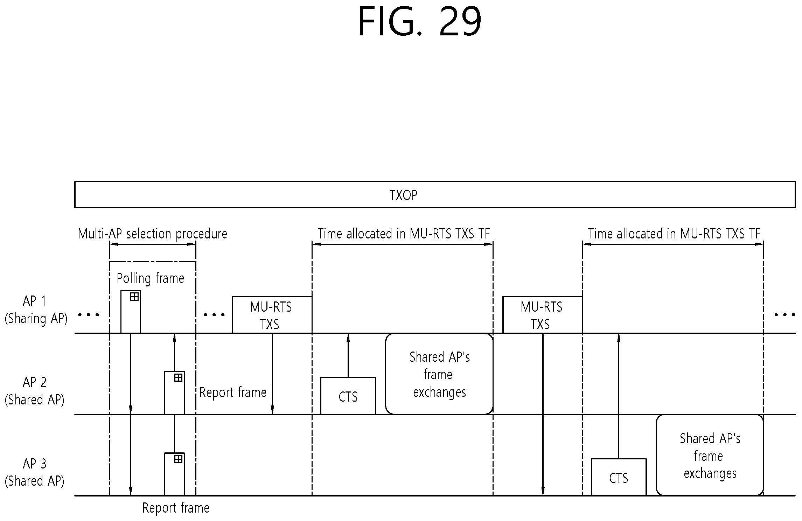

FIG. 29 illustrates Example-2 of a Simultaneous Multi-AP selection procedure for selecting a plurality of DAPs.

FIG. 28 and FIG. 29 illustrate Example-1 and Example-2 of a Simultaneous Multi-AP selection procedure among examples for performing Multi-AP selection for a plurality of DAPs. Each AP follows the operations defined in sections 2.1 and 2.2. FIG. 28 and FIG. 29 indicate that a request/response frame in the Simultaneous Multi-AP selection procedure may be an MU-RTS (TXS) TF/CTS frame or a Polling frame (Trigger frame)/Report frame (TB PPDU). A start of a time allocated to subsequent DAP(s) may start with transmission of an individual MU-RTS (TXS) TF.

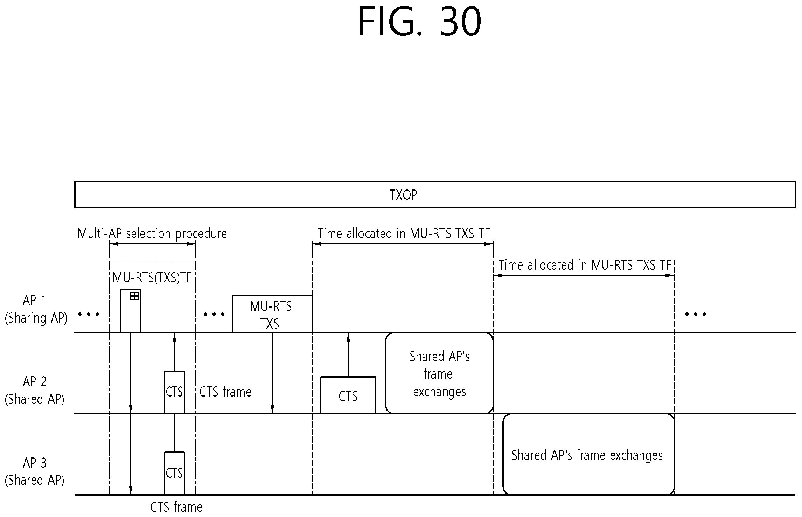

FIG. 30 illustrates Example-3 of a Simultaneous Multi-AP selection procedure for selecting a plurality of DAPs.

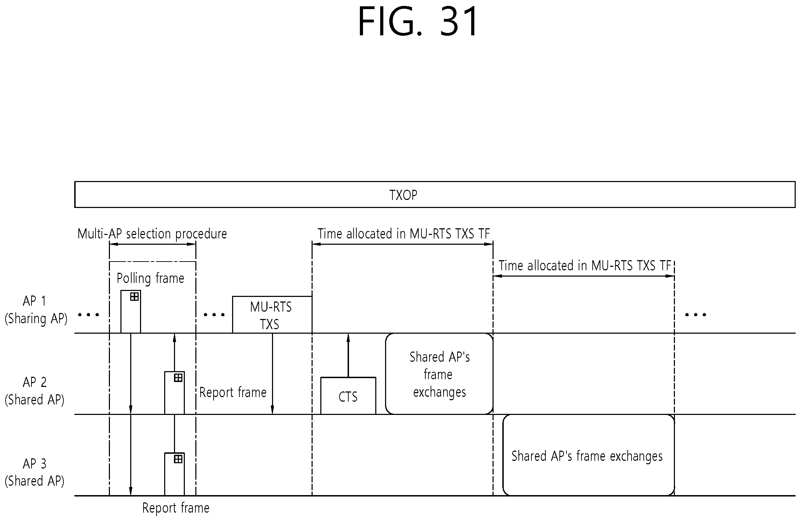

FIG. 31 illustrates Example-4 of a Simultaneous Multi-AP selection procedure for selecting a plurality of DAPs.

Alternatively, as illustrated in FIG. 30 and FIG. 31, a start of a time allocated to subsequent DAP(s) may be performed by the DAP(s) on their own based on a scheduled time, without transmission of an individual MU-RTS TXS TF from a SAP.

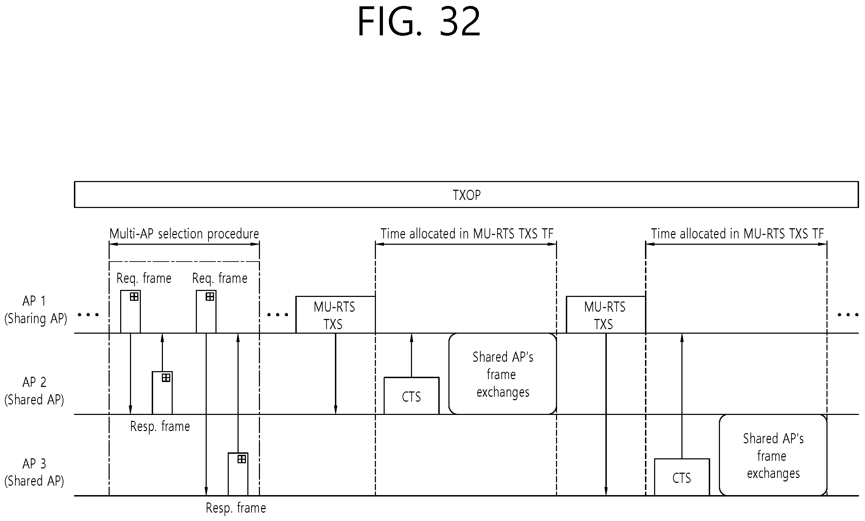

FIG. 32 illustrates Example-1 of a Sequential Multi-AP selection procedure for selecting a plurality of DAPs.

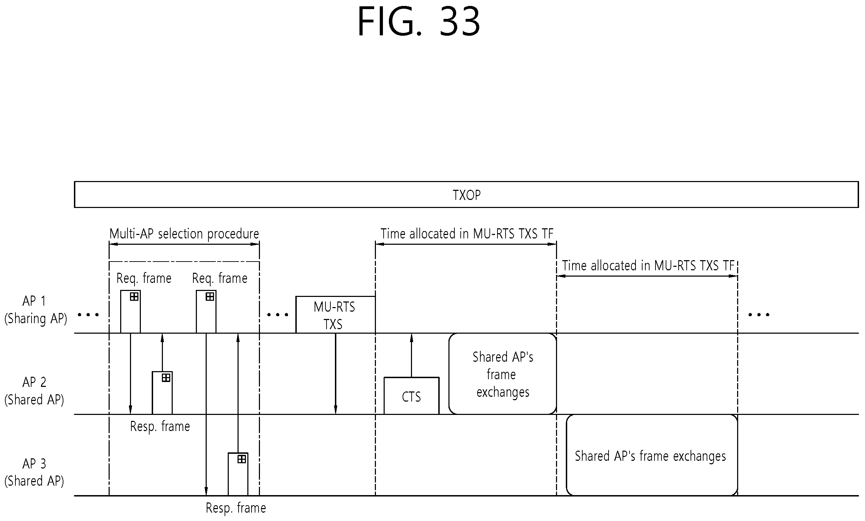

FIG. 33 illustrates Example-2 of a Sequential Multi-AP selection procedure for selecting a plurality of DAPs.

FIG. 32 and FIG. 33 illustrate Example-1 and Example-2 of a Sequential Multi-AP selection procedure among examples for performing Multi-AP selection for a plurality of DAPs. Each AP follows the operations defined in sections 2.1 and 2.2. FIG. 32 and FIG. 33 indicate that a start of a time allocated to subsequent DAP(s) through the Sequential Multi-AP selection procedure may start with transmission of an individual MU-RTS TXS TF from a SAP, or may be performed by the DAP(s) on their own based on a scheduled time.

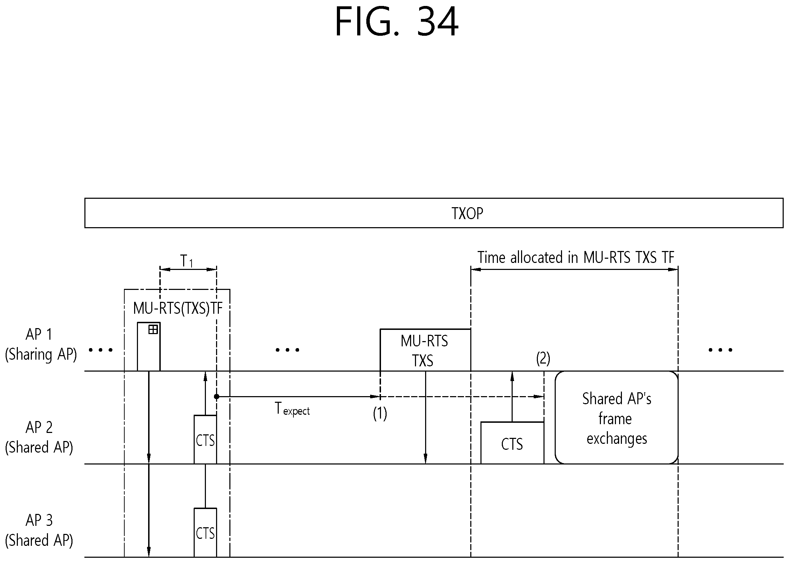

FIG. 34 illustrates an example of a Simultaneous Multi-AP selection procedure based on Option #1-(5) of section 2.2.2.

FIG. 34 illustrates an example of a Simultaneous Multi-AP selection procedure based on the duration setting method of Option #1-(5) in section 2.2.2 among examples for performing Multi-AP selection for a plurality of DAPs. Each AP follows the operations defined in sections 2.1 and 2.2. FIG. 34 indicates that a request/response frame in the Simultaneous Multi-AP selection procedure may be an MU-RTS (TXS) TF/CTS frame.

Based on the duration setting method of Option #1-(5) in section 2.2.2, a Duration/ID field of an MU-RTS (TXS) TF is set to a value of T_1, and a T_expect value may be included in a User Info field or a Common Info field. A SAP may include identification information of a DAP scheduled for TXOP sharing (e.g., AP 2 in FIG. 34) within an acquired TXOP in an AID field of the User Info field, and a corresponding DAP receiving this may transmit a CTS frame including the value of T_expect in a Duration/ID field instead of the value of the Duration/ID field of the MU-RTS (TXS) TF. At this time, the T_expect value may include a period until transmitting an MU-RTS TXS TF transmitted for the purpose of TXOP sharing (i.e., (1) in FIG. 34) or a period until transmitting a CTS frame, which is a response frame for the MU-RTS TXS TF transmitted for the purpose of TXOP sharing (i.e., (2) in FIG. 34).

The present specification proposes a procedure for a SAP intending to perform C-TDMA transmission in a Multi-AP environment to select a DAP that is a target of TXOP sharing. Specifically, an AP serving as a SAP may deliver a request frame to select DAP(s) to share a TXOP, and a target DAP receiving this may deliver a response frame based on the necessity of sharing. Based on a target DAP not requiring TXOP sharing or failing to receive a response frame for the request frame, a reselection procedure for sending a request frame to other DAP(s) may be performed. Alternatively, a selection/notification procedure in a method of simply notifying a target DAP that TXOP sharing is scheduled may be performed. Alternatively, the Multi-AP selection procedure may be omitted based on some situations. Through the Multi-AP selection procedure using several proposed selection methods, DAP(s) that are targets of sharing or DAP(s) that will not receive sharing have an advantage in that they may perform subsequent operations, set a NAV, or enter a mode/state for power saving based on delivered information or frames.

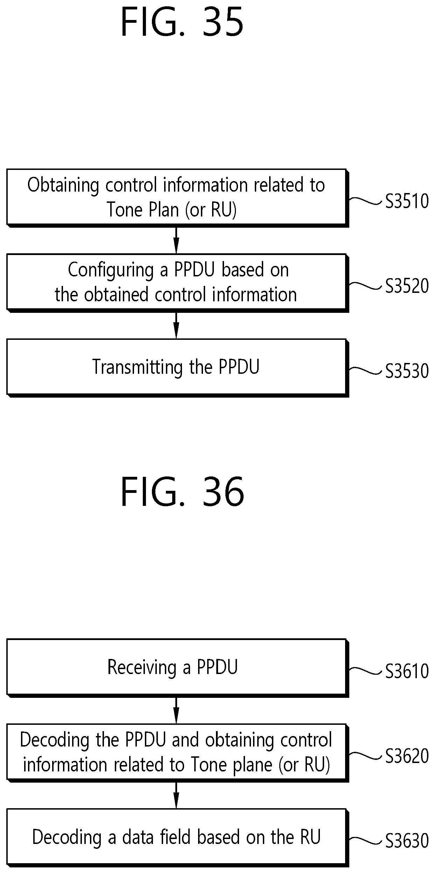

FIG. 35 is a procedure flowchart illustrating an operation of a transmitting apparatus according to the present embodiment.

The example of FIG. 35 may be performed by a transmitting device (AP and/or non-AP STA).

Some of each step (or detailed sub-step to be described later) of the example of FIG. 35 may be skipped/omitted.

Through step S3510, the transmitting device (transmitting STA) may obtain information about the above-described tone plan. As described above, the information about the tone plan includes the size and location of the RU, control information related to the RU, information about a frequency band including the RU, information about an STA receiving the RU, and the like.

Through step S3520, the transmitting device may construct/generate a PPDU based on the acquired control information. Configuring/generating the PPDU may include configuring/generating each field of the PPDU. That is, step S3520 includes configuring the EHT-SIG field including control information about the tone plan. That is, step S3520 includes configuring a field including control information (e.g., N bitmap) indicating the size/position of the RU; and/or configuring a field including an identifier of an STA receiving the RU (e.g., AID).

Also, step S3520 may include generating an STF/LTF sequence transmitted through a specific RU. The STF/LTF sequence may be generated based on a preset STF generation sequence/LTF generation sequence.

Also, step S3520 may include generating a data field (i.e., MPDU) transmitted through a specific RU.

The transmitting device may transmit the PPDU constructed through step S3520 to the receiving device based on step S3530.

While performing step S3530, the transmitting device may perform at least one of operations such as CSD, Spatial Mapping, IDFT/IFFT operation, and GI insertion.

A signal/field/sequence constructed according to the present specification may be transmitted in the form of FIG. 5.

FIG. 36 is a procedure flowchart illustrating an operation of a receiving apparatus according to the present embodiment.

The aforementioned PPDU may be received according to the example of FIG. 36.

The example of FIG. 36 may be performed by a receiving apparatus/device (AP and/or non-AP STA).

Some of each step (or detailed sub-step to be described later) of the example of FIG. 36 may be skipped/omitted.

The receiving device (receiving STA) may receive all or part of the PPDU through step S3610. The received signal may be in the form of FIG. 5.

A sub-step of step S3610 may be determined based on step S3530 of FIG. 35. That is, in step S3610, an operation of restoring the result of the CSD, Spatial Mapping, IDFT/IFFT operation, and GI insertion operation applied in step S3530 may be performed.

In step S3620, the receiving device may perform decoding on all/part of the PPDU. Also, the receiving device may obtain control information related to a tone plan (i.e., RU) from the decoded PPDU.

More specifically, the receiving device may decode the L-SIG and EHT-SIG of the PPDU based on the legacy STF/LTF and obtain information included in the L-SIG and EHT SIG fields. Information on various tone plans (i.e., RUs) described in this specification may be included in the EHT-SIG, and the receiving STA may obtain information on the tone plan (i.e., RU) through the EHT-SIG.

In step S3630, the receiving device may decode the remaining part of the PPDU based on information about the tone plan (i.e., RU) acquired through step S3620. For example, the receiving STA may decode the STF/LTF field of the PPDU based on information about one plan (i.e., RU). In addition, the receiving STA may decode the data field of the PPDU based on information about the tone plan (i.e., RU) and obtain the MPDU included in the data field.

In addition, the receiving device may perform a processing operation of transferring the data decoded through step S3630 to a higher layer (e.g., MAC layer). In addition, when generation of a signal is instructed from the upper layer to the PHY layer in response to data transmitted to the upper layer, a subsequent operation may be performed.

Hereinafter, the above-described embodiment will be described with reference to FIG. 1 to FIG. 36.

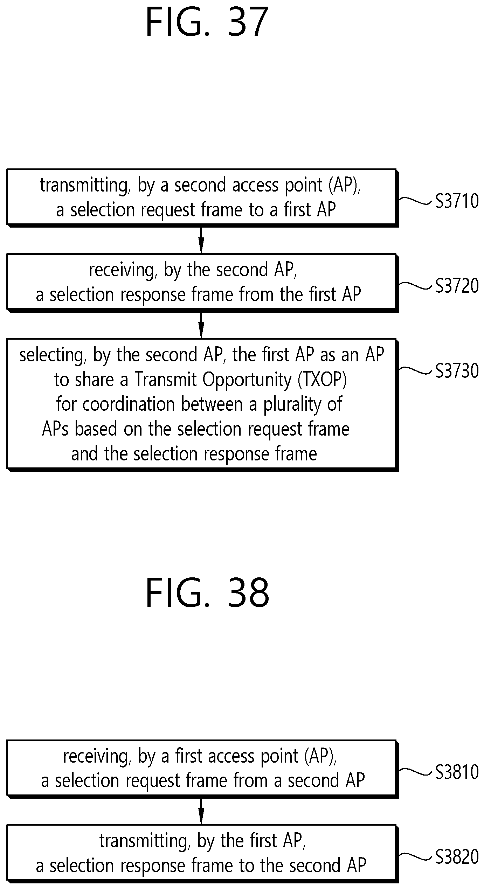

FIG. 37 is a flowchart illustrating a procedure of a method for performing coordination between a plurality of APs by selecting an AP that shares a TXOP (or performs coordination between APs) in terms of a Sharing AP according to the present embodiment.

The example of FIG. 37 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

An example of FIG. 37 may be performed in a second AP, the second AP may be set as a sharing AP (SAP) after negotiation in multi-AP communication, and the first AP may be set as a shared AP (DAP) after negotiation in multi-AP communication. First and second non-AP STAs of the present embodiment may correspond to at least one station (STA).

The present embodiment proposes a method for performing coordination between a plurality of APs (for example, C-TDMA, C-SR, C-BF, C-OFDMA or J-TX) by selecting one or more APs that share a TXOP. In particular, the present embodiment may determine the necessity of Multi-AP coordination of the DAP in a procedure for selecting one or more APs and determine this, and proposes a method in which the DAP performs a frame exchange with a non-AP STA in a BSS after securing a duration set in a Duration field.

In step S3710, a second access point (AP) transmits a selection request frame to a first AP.

In step S3720, the second AP receives a selection response frame from the first AP.

In step S3730, the second AP selects the first AP as an AP to share a Transmit Opportunity (TXOP) for coordination between a plurality of APs based on the selection request frame and the selection response frame.

The selection request frame may include at least one of information on a TXOP duration scheduled by the second AP for the coordination between the plurality of APs, information on a timing of sharing the TXOP expected or scheduled by the second AP, information on low-latency traffic that each of the plurality of APs intends to transmit and receive, and information on a priority or a protection level of the coordination between the plurality of APs.

The TXOP duration scheduled by the second AP for the coordination between the plurality of APs may be a nominal TXOP duration scheduled by the second AP for the coordination between the plurality of APs.

In addition, the selection request frame may further include at least one of an identifier of a group for the coordination between the plurality of APs, an identifier of the Shared AP, information on a capability to operate as the Sharing AP, information indicating that the Sharing AP shares the TXOP with the Shared AP, information on a scheme of the coordination between the plurality of APs, address information of the Shared AP, channel information in which the plurality of APs operate, and bandwidth information in which the plurality of APs operate.

The selection response frame may include at least one of the identifier of the group for the coordination between the plurality of APs, the identifier of the Shared AP, the address information of the Shared AP, the channel information in which the plurality of APs operate, the bandwidth information in which the plurality of APs operate, information on a duration of a TXOP that the Shared AP desires to be shared, buffer status information of the Shared AP, information on whether sharing of a TXOP by the Sharing AP is required, information on low-latency traffic transmitted and received by each of the plurality of APs, and a status code.

For example, the present embodiment proposes a method of determining whether TXOP sharing is required for the first AP based on the above-described information in a procedure of selecting a Multi-AP, and selecting (or determining whether to select) the first AP as a DAP participating in the coordination between the plurality of APs. For example, through the procedure of selecting the Multi-AP, a SAP may determine the necessity for TXOP sharing of a DAP within an acquired TXOP, and based on the DAP not requiring TXOP sharing, may determine TXOP sharing to a subsequent DAP or may not perform TXOP sharing. This has an effect of reducing overhead in the procedure for Multi-AP selection for example the SAP notifies the target DAP of information on TXOP sharing.

In addition, the present embodiment allows the DAP to perform frame exchange during the shared TXOP after a time set based on a value of a Duration field of a request frame transmitted by the SAP in the procedure for Multi-AP selection and after a TXOP sharing procedure. Specifically, a method of setting the Duration field may vary, and a characteristic is that operations of surrounding STAs of the DAP may or may not be restricted based on the method of setting the Duration field. Based on restricting the operations of the surrounding STAs of the DAP, there is an effect that the DAP may stably perform frame exchange with a non-AP STA within a BSS after the secured time.

Specifically, the second AP transmits an Multi User-Request to Send (MU-RTS) TXOP sharing (TXS) trigger frame to the first AP. The second AP receives a Clear to Send (CTS) frame from the first AP. After a first time, the first AP exchanges a first frame with a first non-AP station (STA).

At this time, the second AP is a Sharing AP controlling the coordination between the plurality of APs, and the first AP is a Shared AP allocated or shared with resources from the Sharing AP. The first non-AP STA is a non-AP STA within a Basic Service Set (BSS) of the first AP.

The first time is set based on a value of a Duration field included in the selection request frame.

The value of the Duration field may be set to one of T_1, T_2, T_3, and T_4.

T_1 may be a value indicating a time interval from a timing when the selection request frame is transmitted until receiving the selection response frame.

T_2 may be a value indicating a time interval for frame exchange within a BSS of the second AP from the timing when the selection request frame is transmitted.

T_3 may be a value indicating a time interval from the timing when the selection request frame is transmitted until transmitting the MU-RTS TXS TF.

T_4 may be a value indicating a time interval from the timing when the selection request frame is transmitted until receiving the CTS frame.

The first AP may wait without performing any operation until the first time, perform channel access for a non-primary channel, or enter an AP power mode. That is, the present embodiment proposes a method that does not affect frame exchange by securing the first time so that the first AP may smoothly perform frame exchange with the first non-AP STA after the first time.

The non-primary channel may be a secondary 20MHz channel capable of performing backoff while a Network Allocation Vector (NAV) is set in a primary 20MHz channel.

The first AP may exchange the first frame with the first non-AP STA during a first TXOP. The first TXOP may be set based on time information of the MU-RTS TXS trigger frame.

The second AP may exchange a second frame with a second non-AP STA during a second TXOP. The second TXOP may be set based on T_2. The second non-AP STA may be a non-AP STA within the BSS of the second AP.

For example, based on the second frame including a plurality of frames, a value of a Duration field of a first frame among the plurality of frames may be set to T_FE.

T_FE may be a value indicating a time interval from a timing when the first frame is transmitted until a timing when the second TXOP ends.

At this time, a value of a Duration field of the MU-RTS TXS trigger frame may be set to T_TXS. T_TXS may be a value indicating a time interval from a timing when the MU-RTS TXS trigger frame is transmitted until receiving the CTS frame.

As another example, based on the second frame including third to fifth frames, a value of a Duration field of the third frame is set to T_FE1, a value of a Duration field of the fourth frame is set to T_FE2, and a value of a Duration field of the fifth frame is set to T_FE3.

T_FE1 may be a value indicating a time interval from a timing when the third frame is transmitted until a timing when a response frame for the third frame is received. T_FE2 may be a value indicating a time interval from a timing when the fourth frame is transmitted until a timing when a response frame for the fourth frame is received. T_FE3 may be a value indicating a time interval from a timing when the fifth frame is transmitted until a timing when a response frame for the fifth frame is received.

At this time, a value of a Duration field of the MU-RTS TXS trigger frame may be set to T_TXS. T_TXS may be a value indicating a time interval from a timing when the MU-RTS TXS trigger frame is transmitted until receiving the CTS frame.

As another example, based on the second frame including a plurality of frames, a value of a Duration field of a first frame among the plurality of frames may be set to a time interval obtained by subtracting T_1 from T_3, or set to a time interval obtained by subtracting T_1 from T_4.

As another example, based on the selection request frame being a trigger frame, an Association Identifier (AID) field of a user info field of the trigger frame may include identification information of the firstAP. A NAV for the first AP may be set based on information on a timing of sharing the TXOP expected or scheduled by the second AP, which is included in the user info field or a common info field of the trigger frame. The information on the timing of sharing the TXOP expected or scheduled by the second AP may be Expected TXOP sharing timing information.

A scheme for the coordination between the plurality of APs may include a coordinated Multi-AP scheme such as Coordinated-Time Division Multiplexing Access (C-TDMA), Coordinated-Spatial Reuse (C-SR), Coordinated-beamforming (C-BF), or Coordinated-Orthogonal Frequency Division Multiple Access (C-OFDMA).

FIG. 38 is a flowchart illustrating a procedure of a method for performing coordination between a plurality of APs by selecting an AP that shares a TXOP (or performs coordination between APs) in terms of a Shared AP according to the present embodiment.

The example of FIG. 38 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

An example of FIG. 38 may be performed in a first AP, the first AP may be set as a shared AP (DAP) after negotiation in multi-AP communication, and the second AP may be set as a sharing AP (SAP) after negotiation in the multi-AP communication. First and second non-AP STAs of the present embodiment may correspond to at least one station (STA).

The present embodiment proposes a method for performing coordination between a plurality of APs (for example, C-TDMA, C-SR, C-BF, C-OFDMA or J-TX) by selecting one or more APs that share a TXOP. In particular, the present embodiment may determine the necessity of Multi-AP coordination of the DAP in a procedure for selecting one or more APs and determine this, and proposes a method in which the DAP performs a frame exchange with a non-AP STA in a BSS after securing a duration set in a Duration field.

In step S3810, a first access point (AP) receives a selection request frame from a second AP.

In step S3820, the firstAP transmits a selection response frame to the second AP.

Based on the selection request frame and the selection response frame, the first AP is selected as an AP to share a Transmit Opportunity (TXOP) for coordination between a plurality of APs.

The selection request frame may include at least one of information on a TXOP duration scheduled by the second AP for the coordination between the plurality of APs, information on a timing of sharing the TXOP expected or scheduled by the second AP, information on low-latency traffic that each of the plurality of APs intends to transmit and receive, and information on a priority or a protection level of the coordination between the plurality of APs.

The TXOP duration scheduled by the second AP for the coordination between the plurality of APs may be a nominal TXOP duration scheduled by the second AP for the coordination between the plurality of APs.

In addition, the selection request frame may further include at least one of an identifier of a group for the coordination between the plurality of APs, an identifier of the Shared AP, information on a capability to operate as the Sharing AP, information indicating that the Sharing AP shares the TXOP with the Shared AP, information on a scheme of the coordination between the plurality of APs, address information of the Shared AP, channel information in which the plurality of APs operate, and bandwidth information in which the plurality of APs operate.

The selection response frame may include at least one of the identifier of the group for the coordination between the plurality of APs, the identifier of the Shared AP, the address information of the Shared AP, the channel information in which the plurality of APs operate, the bandwidth information in which the plurality of APs operate, information on a duration of a TXOP that the Shared AP desires to be shared, buffer status information of the Shared AP, information on whether sharing of a TXOP by the Sharing AP is required, information on low-latency traffic transmitted and received by each of the plurality of APs, and a status code.

For example, the present embodiment proposes a method of determining whether TXOP sharing is required for the first AP based on the above-described information in a procedure of selecting a Multi-AP, and selecting (or determining whether to select) the first AP as a DAP participating in the coordination between the plurality of APs. For example, through the procedure of selecting the Multi-AP, a SAP may determine the necessity for TXOP sharing of a DAP within an acquired TXOP, and based on the DAP not requiring TXOP sharing, may determine TXOP sharing to a subsequent DAP or may not perform TXOP sharing. This has an effect of reducing overhead in the procedure for Multi-AP selection for example the SAP notifies the target DAP of information on TXOP sharing.

In addition, the present embodiment allows the DAP to perform frame exchange during the shared TXOP after a time set based on a value of a Duration field of a request frame transmitted by the SAP in the procedure for Multi-AP selection and after a TXOP sharing procedure. Specifically, a method of setting the Duration field may vary, and a characteristic is that operations of surrounding STAs of the DAP may or may not be restricted based on the method of setting the Duration field. Based on restricting the operations of the surrounding STAs of the DAP, there is an effect that the DAP may stably perform frame exchange with a non-AP STA within a BSS after the secured time.

Specifically, the second AP transmits an Multi User-Request to Send (MU-RTS) TXOP sharing (TXS) trigger frame to the first AP. The second AP receives a Clear to Send (CTS) frame from the first AP. After a first time, the first AP exchanges a first frame with a first non-AP station (STA).

At this time, the second AP is a Sharing AP controlling the coordination between the plurality of APs, and the first AP is a Shared AP allocated or shared with resources from the Sharing AP. The first non-AP STA is a non-AP STA within a Basic Service Set (BSS) of the first AP.

The first time is set based on a value of a Duration field included in the selection request frame.

The value of the Duration field may be set to one of T_1, T_2, T_3, and T_4.

T_1 may be a value indicating a time interval from a timing when the selection request frame is transmitted until receiving the selection response frame.

T_2 may be a value indicating a time interval for frame exchange within a BSS of the second AP from the timing when the selection request frame is transmitted.

T_3 may be a value indicating a time interval from the timing when the selection request frame is transmitted until transmitting the MU-RTS TXS TF.

T_4 may be a value indicating a time interval from the timing when the selection request frame is transmitted until receiving the CTS frame.

The first AP may wait without performing any operation until the first time, perform channel access for a non-primary channel, or enter an AP power mode. That is, the present embodiment proposes a method that does not affect frame exchange by securing the first time so that the first AP may smoothly perform frame exchange with the first non-AP STA after the first time.

The non-primary channel may be a secondary 20MHz channel capable of performing backoff while a Network Allocation Vector (NAV) is set in a primary 20MHz channel.

The first AP may exchange the first frame with the first non-AP STA during a first TXOP. The first TXOP may be set based on time information of the MU-RTS TXS trigger frame.

The second AP may exchange a second frame with a second non-AP STA during a second TXOP. The second TXOP may be set based on T_2. The second non-AP STA may be a non-AP STA within the BSS of the second AP.

For example, based on the second frame including a plurality of frames, a value of a Duration field of a first frame among the plurality of frames may be set to T_FE.

T_FE may be a value indicating a time interval from a timing when the first frame is transmitted until a timing when the second TXOP ends.

At this time, a value of a Duration field of the MU-RTS TXS trigger frame may be set to T_TXS. T_TXS may be a value indicating a time interval from a timing when the MU-RTS TXS trigger frame is transmitted until receiving the CTS frame.

As another example, based on the second frame including third to fifth frames, a value of a Duration field of the third frame is set to T_FE1, a value of a Duration field of the fourth frame is set to T_FE2, and a value of a Duration field of the fifth frame is set to T_FE3.

T_FE1 may be a value indicating a time interval from a timing when the third frame is transmitted until a timing when a response frame for the third frame is received. T_FE2 may be a value indicating a time interval from a timing when the fourth frame is transmitted until a timing when a response frame for the fourth frame is received. T_FE3 may be a value indicating a time interval from a timing when the fifth frame is transmitted until a timing when a response frame for the fifth frame is received.

At this time, a value of a Duration field of the MU-RTS TXS trigger frame may be set to T_TXS. T_TXS may be a value indicating a time interval from a timing when the MU-RTS TXS trigger frame is transmitted until receiving the CTS frame.

As another example, based on the second frame including a plurality of frames, a value of a Duration field of a first frame among the plurality of frames may be set to a time interval obtained by subtracting T_1 from T_3, or set to a time interval obtained by subtracting T_1 from T_4.

As another example, based on the selection request frame being a trigger frame, an Association Identifier (AID) field of a user info field of the trigger frame may include identification information of the firstAP. A NAV for the first AP may be set based on information on a timing of sharing the TXOP expected or scheduled by the second AP, which is included in the user info field or a common info field of the trigger frame. The information on the timing of sharing the TXOP expected or scheduled by the second AP may be Expected TXOP sharing timing information.

A scheme for the coordination between the plurality of APs may include a coordinated Multi-AP scheme such as Coordinated-Time Division Multiplexing Access (C-TDMA), Coordinated-Spatial Reuse (C-SR), Coordinated-beamforming (C-BF), or Coordinated-Orthogonal Frequency Division Multiple Access (C-OFDMA).

### < Device configuration>

The technical features of the present disclosure may be applied to various devices and methods. For example, the technical features of the present disclosure may be performed/supported through the device(s) of FIG. 1 and/or FIG. 13. For example, the technical features of the present disclosure may be applied to only part of FIG. 1 and/or FIG. 13. For example, the technical features of the present disclosure may be implemented based on the processing chip(s) 114 and 124 of FIG. 1, or implemented based on the processor(s) 111 and 121 and the memory(s) 112 and 122, or implemented based on the processor 610 and the memory 620 of FIG. 13. For example, the device according to the present disclosure receives a selection request frame from a second access point (AP); and transmits a selection response frame to the second AP.

The technical features of the present disclosure may be implemented based on a computer readable medium (CRM). For example, a CRM according to the present disclosure is at least one computer readable medium including instructions designed to be executed by at least one processor.

The CRM may store instructions that perform operations including receiving a selection request frame from a second access point (AP); and transmitting a selection response frame to the second AP. At least one processor may execute the instructions stored in the CRM according to the present disclosure. At least one processor related to the CRM of the present disclosure may be the processor 111, 121 of FIG. 1, the processing chip 114, 124 of FIG. 1, or the processor 610 of FIG. 13. Meanwhile, the CRM of the present disclosure may be the memory 112, 122 of FIG. 1, the memory 620 of FIG. 13, or a separate external memory/storage medium/disk.

The foregoing technical features of the present specification are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method.

## Claims

1. A method in a wireless local area network (WLAN) system, the method comprising:
receiving, by a first access point (AP), a selection request frame from a second AP; and
transmitting, by the first AP, a selection response frame to the second AP,
wherein, based on the selection request frame and the selection response frame, the first AP is selected as an AP to share a Transmit Opportunity (TXOP) for coordination between a plurality of APs, and
wherein the selection request frame includes at least one of information on a TXOP duration scheduled by the second AP for the coordination between the plurality of APs, information on a timing of sharing the TXOP expected or scheduled by the second AP, information on low-latency traffic that each of the plurality of APs intends to transmit and receive, and information on a priority or a protection level of the coordination between the plurality of APs.

2. The method of claim 1, further comprising:
receiving, by the first AP, an Multi User-Request to Send (MU-RTS) TXOP sharing (TXS) trigger frame from the second AP;
transmitting, by the first AP, a Clear to Send (CTS) frame to the second AP; and
exchanging, by the first AP, a first frame with a first non-AP station (STA) after a first time,
wherein the second AP is a Sharing AP controlling the coordination between the plurality of APs,
wherein the first AP is a Shared AP allocated or shared with resources from the Sharing AP,
wherein the first non-AP STA is a non-AP STA within a Basic Service Set (BSS) of the first AP, and
wherein the first time is set based on a value of a Duration field included in the selection request frame.

3. The method of claim 2, wherein the value of the Duration field is set to one of T_1, T_2, T_3 and T_4,
wherein T_1 is a value indicating a time interval from a timing when the selection request frame is transmitted until receiving the selection response frame,
wherein T_2 is a value indicating a time interval for frame exchange within a BSS of the second AP from the timing when the selection request frame is transmitted,
wherein T_3 is a value indicating a time interval from the timing when the selection request frame is transmitted until transmitting the MU-RTS TXS TF, and
wherein T_4 is a value indicating a time interval from the timing when the selection request frame is transmitted until receiving the CTS frame.

4. The method of claim 3, further comprising:
waiting, by the first AP, without performing any operation until the first time, performing channel access for a non-primary channel, or entering an AP power mode,
wherein the non-primary channel is a secondary 20MHz channel capable of performing backoff while a Network Allocation Vector (NAV) is set in a primary 20MHz channel.

5. The method of claim 3, wherein the first AP exchanges the first frame with the first non-AP STA during a first TXOP,
wherein the first TXOP is set based on time information of the MU-RTS TXS trigger frame,
wherein the second AP exchanges a second frame with a second non-AP STA during a second TXOP,
wherein the second TXOP is set based on T 2, and
wherein the second non-AP STA is a non-AP STA within the BSS of the second AP.

6. The method of claim 5, wherein, based on the second frame including a plurality of frames, a value of a Duration field of a first frame among the plurality of frames is set to T_FE,
wherein T_FE is a value indicating a time interval from a timing when the first frame is transmitted until a timing when the second TXOP ends,
wherein a value of a Duration field of the MU-RTS TXS trigger frame is set to T_TXS, and
wherein T_TXS is a value indicating a time interval from a timing when the MU-RTS TXS trigger frame is transmitted until receiving the CTS frame.

7. The method of claim 5, wherein, based on the second frame including third to fifth frames,
a value of a Duration field of the third frame is set to T_FE1,
a value of a Duration field of the fourth frame is set to T_FE2,
a value of a Duration field of the fifth frame is set to T_FE3,
wherein T_FE1 is a value indicating a time interval from a timing when the third frame is transmitted until a timing when a response frame for the third frame is received,
wherein T_FE2 is a value indicating a time interval from a timing when the fourth frame is transmitted until a timing when a response frame for the fourth frame is received,
wherein T_FE3 is a value indicating a time interval from a timing when the fifth frame is transmitted until a timing when a response frame for the fifth frame is received,
wherein a value of a Duration field of the MU-RTS TXS trigger frame is set to T_TXS, and
wherein T_TXS is a value indicating a time interval from a timing when the MU-RTS TXS trigger frame is transmitted until receiving the CTS frame.

8. The method of claim 5, wherein, based on the second frame including a plurality of frames,
a value of a Duration field of a first frame among the plurality of frames is set to a time interval obtained by subtracting T_1 from T_3, or set to a time interval obtained by subtracting T_1 from T_4.

9. The method of claim 5, wherein, based on the selection request frame being a trigger frame,
an Association Identifier (AID) field of a user info field of the trigger frame includes identification information of the first AP, and
wherein a NAV for the first AP is set based on information on a timing of sharing the TXOP expected or scheduled by the second AP, which is included in the user info field or a common info field of the trigger frame.

10. The method of claim 9, wherein the selection request frame further includes at least one of an identifier of a group for the coordination between the plurality of APs, an identifier of the Shared AP, information on a capability to operate as the Sharing AP, information indicating that the Sharing AP shares the TXOP with the Shared AP, information on a scheme of the coordination between the plurality of APs, address information of the Shared AP, channel information in which the plurality of APs operate, and bandwidth information in which the plurality of APs operate, and
wherein the selection response frame includes at least one of the identifier of the group for the coordination between the plurality of APs, the identifier of the Shared AP, the address information of the Shared AP, the channel information in which the plurality of APs operate, the bandwidth information in which the plurality of APs operate, information on a duration of a TXOP that the Shared AP desires to be shared, buffer status information of the Shared AP, information on whether sharing of a TXOP by the Sharing AP is required, information on low-latency traffic transmitted and received by each of the plurality of APs, and a status code.

11. A first access point (AP) in a wireless local area network (WLAN) system, the first AP comprising:
a memory;
a transceiver; and
a processor being operatively connected to the memory and the transceiver,
wherein the processor is configured to:
receive a selection request frame from a second AP; and
transmit a selection response frame to the second AP,
wherein, based on the selection request frame and the selection response frame, the first AP is selected as an AP to share a Transmit Opportunity (TXOP) for coordination between a plurality of APs, and
wherein the selection request frame includes at least one of information on a TXOP duration scheduled by the second AP for the coordination between the plurality of APs, information on a timing of sharing the TXOP expected or scheduled by the second AP, information on low-latency traffic that each of the plurality of APs intends to transmit and receive, and information on a priority or a protection level of the coordination between the plurality of APs.

12. A method in a wireless local area network (WLAN) system, the method comprising:
transmitting, by a second access point (AP), a selection request frame to a first AP;
receiving, by the second AP, a selection response frame from the first AP; and
selecting, by the second AP, the first AP as an AP to share a Transmit Opportunity (TXOP) for coordination between a plurality of APs based on the selection request frame and the selection response frame,
wherein the selection request frame includes at least one of information on a TXOP duration scheduled by the second AP for the coordination between the plurality of APs, information on a timing of sharing the TXOP expected or scheduled by the second AP, information on low-latency traffic that each of the plurality of APs intends to transmit and receive, and information on a priority or a protection level of the coordination between the plurality of APs.

13. The method of claim 12, further comprising:
based on the first AP not being an AP to share a TXOP for the coordination between the plurality of APs,
transmitting, by the second AP, a separate selection request frame to a third AP and receiving a separate selection response frame from the third AP; or
not performing, by the second AP, a procedure of selecting an AP to share a TXOP for the coordination between the plurality of APs.

14. The method of claim 12, further comprising:
transmitting, by the second AP, an Multi User-Request to Send (MU-RTS) TXOP sharing (TXS) trigger frame to the first AP; and
receiving, by the second AP, a Clear to Send (CTS) frame from the first AP,
wherein, after a first time, a first frame is exchanged between the first AP and a first non-AP station (STA),
wherein the second AP is a Sharing AP controlling the coordination between the plurality of APs,
wherein the first AP is a Shared AP allocated or shared with resources from the Sharing AP,
wherein the first non-AP STA is a non-AP STA within a Basic Service Set (BSS) of the first AP, and
wherein the first time is set based on a value of a Duration field included in the request frame.

15. The method of claim 14, wherein the value of the Duration field is set to one of T_1, T_2, T_3 and T_4,
wherein T_1 is a value indicating a time interval from a timing when the selection request frame is transmitted until receiving the selection response frame,
wherein T_2 is a value indicating a time interval for frame exchange within a BSS of the second AP from the timing when the selection request frame is transmitted,
wherein T_3 is a value indicating a time interval from the timing when the selection request frame is transmitted until transmitting the MU-RTS TXS TF, and
wherein T_4 is a value indicating a time interval from the timing when the selection request frame is transmitted until receiving the CTS frame.

16. The method of claim 15, wherein the first AP exchanges the first frame with the first non-AP STA during a first TXOP,
wherein the first TXOP is set based on time information of the MU-RTS TXS trigger frame,
wherein the second AP exchanges a second frame with a second non-AP STA during a second TXOP,
wherein the second TXOP is set based on T 2, and
wherein the second non-AP STA is a non-AP STA within the BSS of the second AP.

17. The method of claim 16, wherein, based on the second frame including a plurality of frames, a value of a Duration field of a first frame among the plurality of frames is set to T_FE,
wherein T_FE is a value indicating a time interval from a timing when the first frame is transmitted until a timing when the second TXOP ends,
wherein a value of a Duration field of the MU-RTS TXS trigger frame is set to T_TXS, and
wherein T_TXS is a value indicating a time interval from a timing when the MU-RTS TXS trigger frame is transmitted until receiving the CTS frame.

18. A second access point (AP) in a wireless local area network (WLAN) system, the second AP comprising:
a memory;
a transceiver; and
a processor being operatively connected to the memory and the transceiver,
wherein the processor is configured to:
transmit a selection request frame to a first AP;
receive a selection response frame from the first AP; and
selecting, by the second AP, the first AP as an AP to share a Transmit Opportunity (TXOP) for coordination between a plurality of APs based on the selection request frame and the selection response frame,
wherein the selection request frame includes at least one of information on a TXOP duration scheduled by the second AP for the coordination between the plurality of APs, information on a timing of sharing the TXOP expected or scheduled by the second AP, information on low-latency traffic that each of the plurality of APs intends to transmit and receive, and information on a priority or a protection level of the coordination between the plurality of APs.

19. A computer readable medium including an instruction being executed by at least one processor and performing a method comprising the steps of:
receiving a selection request frame from a second access point (AP); and
transmitting a selection response frame to the second AP,
wherein, based on the selection request frame and the selection response frame, a first AP is selected as an AP to share a Transmit Opportunity (TXOP) for coordination between a plurality of APs, and
wherein the selection request frame includes at least one of information on a TXOP duration scheduled by the second AP for the coordination between the plurality of APs, information on a timing of sharing the TXOP expected or scheduled by the second AP, information on low-latency traffic that each of the plurality of APs intends to transmit and receive, and information on a priority or a protection level of the coordination between the plurality of APs.

20. A device in a wireless local area network (WLAN) system, the device comprising:
a memory; and
a processor being operatively connected to the memory,
wherein the processor is configured to:
receive a selection request frame from a second access point (AP); and
transmit a selection response frame to the second AP,
wherein, based on the selection request frame and the selection response frame, a first AP is selected as an AP to share a Transmit Opportunity (TXOP) for coordination between a plurality of APs, and
wherein the selection request frame includes at least one of information on a TXOP duration scheduled by the second AP for the coordination between the plurality of APs, information on a timing of sharing the TXOP expected or scheduled by the second AP, information on low-latency traffic that each of the plurality of APs intends to transmit and receive, and information on a priority or a protection level of the coordination between the plurality of APs.
